(19) Europäisches Patentamt / European Patent Office / Office européen des brevets

(11) **EP 3 006 402 A1**

(12) **EUROPEAN PATENT APPLICATION**
published in accordance with Art. 153(4) EPC

(43) Date of publication:
**13.04.2016 Bulletin 2016/15**

(21) Application number: **14804774.9**

(22) Date of filing: **28.05.2014**

(51) Int Cl.:
*C01G 23/00* (2006.01)     *B01J 23/58* (2006.01)
*B01J 35/02* (2006.01)     *B01J 37/08* (2006.01)
*C01B 3/04* (2006.01)      *C01G 35/00* (2006.01)

(86) International application number:
**PCT/JP2014/064792**

(87) International publication number:
**WO 2014/192965 (04.12.2014 Gazette 2014/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **29.05.2013  JP 2013113426
26.03.2014  JP 2014063855**

(71) Applicant: **Toto Ltd.
Fukuoka 802-8601 (JP)**

(72) Inventors:
• **TOKUDOME, Hiromasa**
  **Kitakyushu-shi**
  **Fukuoka 802-8601 (JP)**
• **OKUNAKA, Sayuri**
  **Kitakyushu-shi**
  **Fukuoka 802-8601 (JP)**

(74) Representative: **Grünecker Patent- und
Rechtsanwälte
PartG mbB
Leopoldstraße 4
80802 München (DE)**

(54) **METHOD FOR PRODUCING METAL OXIDE PARTICLES**

(57)     Disclosed is a method for producing metal oxide particles having high crystallinity and a small primary particle diameter. The method for producing the metal oxide particles according to the present invention comprises: a step of providing an aqueous dispersion comprising a water-soluble transition metal complex and water-dispersible organic polymer particles, wherein the water-soluble transition metal complex comprises one transition metal ion selected from a titanium ion, a tantalum ion, and a niobium ion; as well as a hydrophobic complexing agent and a hydrophilic complexing agent both being coordinated with the transition metal ion; drying the aqueous dispersion to produce a dried body; and firing the dried body.

FIG. 1

EP 3 006 402 A1

## Description

FIELD OF INVENTION

The present invention relates to a method for producing metal oxide particles. In more detail, the present invention relates to a method for producing metal oxide particles having high crystallinity and a small primary particle diameter.

BACKGROUND ART

Some sort of metal oxide particles are visible light responsive photocatalyst capable of utilizing visible light which is abundantly present in solar light. The visible light responsive photocatalyst is expected to be applied to photodecomposition of organic substances and to production of hydrogen by splitting water. Especially, photocatalysts for splitting water to produce hydrogen have drawn attention as photocatalysts used for a generation method of hydrogen by utilizing a renewable energy. Consequently, the demand for photocatalysts for splitting water having a high activity has increased year after year.

Rhodium-doped strontium titanate (Rh-SrTiO$_3$) is, as a photocatalyst for splitting water having a visible light responding property, known to have a high capability of generating hydrogen by splitting water. In addition, a Z-scheme system, in which Rh-SrTiO$_3$ is combined with photocatalyst for oxygen generation, is known to have high energy conversion efficiency in a reaction of splitting water (JP2004-008963A (PTL 1); Sasaki, et al., J. Phys. Chem. C, pp 17536-17542, 2009 (NPTL 1)).

The above Rh-SrTiO$_3$ has hitherto been prepared by a solid-phase reaction method or a hydrothermal synthesis method. It is known that these methods include firing a material at about 1000°C for high crystallization (PTL 1; Iwashina, et al., Journal of the American Chemical Society, pp 13272-13275, 2011 (NPTL 2)). Rh-SrTiO$_3$ particles thus obtained are known to have a primary particle diameter of approximately several hundred nanometers to a few micrometers and have a high hydrogen generation ability under visible light irradiation. Rh-SrTiO$_3$ particles having an increased specific surface area, that is, microcrystalline Rh-SrTiO$_3$ particles, are needed so that the Rh-SrTiO$_3$ particles have enhanced activity.

A method for producing a composite oxide precursor of Ca and Ta by a complex polymerization method in which a large amount of carboxylic acid (citric acid) is complexed with a metal, followed by carrying out polymerization/thermal decomposition of the complex is proposed (JP2002-066333A (PTL 2)).

It is proposed that a titanium compound is mixed with a diketone compound to obtain titanium-acetylacetone complex, followed by adding the complex to an aqueous solution containing an organic carboxylic acid, thereby obtaining a stable aqueous solution containing a titanium complex (JP2012-056947A (PTL 3)).

Citation List

Patent Literature

[PTL 1] JP2004-008963A
[PTL 2] JP2002-066333A
[PTL 3] JP2012-056947A

Non-Patent Literature

[NPTL 1] Sasaki, et al., J. Phys. Chem. C, pp 17536-17542, 2009.
[NPTL 2] Iwashina, et al., Journal of the American Chemical Society, pp 13272-13275, 2011.

SUMMARY OF THE INVENTION

The present Inventors have now found that metal oxide particles having high crystallinity and a small primary particle diameter, that is, a large specific surface area, can be obtained by using an aqueous dispersion which contains a certain water-soluble transition metal complex and water-dispersible organic polymer particles. In addition, it has been found that the metal oxide particles thus obtained have higher ability to generate hydrogen under visible light irradiation.

The present invention is based on such findings.

Accordingly, an object of the present invention is to provide a method for producing metal oxide particles having high crystallinity and a small primary particle diameter. In addition, the present invention has an object to provide metal oxide particles having a high hydrogen generating ability under visible light irradiation.

The method for producing the metal oxide particles according to the present invention comprises steps of: providing an aqueous dispersion comprising a water-soluble transition metal complex and water-dispersible organic polymer particles, wherein the water-soluble transition metal complex comprises one transition metal ion selected from a titanium ion, a tantalum ion, and a niobium ion, as well as a hydrophobic complexing agent and a hydrophilic complexing agent both being coordinated with the transition metal ion; drying the aqueous dispersion to produce a dried body; and firing the dried body.

According to a preferred embodiment of the present invention, in the method for producing the metal oxide particles in the present invention, the hydrophobic complexing agent is a diketone compound.

According to a preferred embodiment of the present invention, in the method for producing the metal oxide particles in the present invention, the hydrophilic compound is a carboxylic acid.

According to a preferred embodiment of the present invention, in the method for producing the metal oxide particles in the present invention, temperature of firing the dried body is 700°C or higher to 1100°C or lower.

According to the method for producing the metal oxide particles of the present invention, metal oxide particles having high crystallinity and a small primary particle diameter can be produced. In addition, according to the method of the present invention, metal oxide particles suitable as photocatalyst particles having a high hydrogen generating ability under visible light irradiation can be produced.

BRIEF DESCRIPTION OF THE DRAWINGS

[FIG. 1] shows a scanning electron microscopic picture of rhodium-doped strontium titanate particles obtained by the production method according to the present invention.
[FIG. 2] shows a transmission electron microscopic picture of rhodium-doped strontium titanate particles obtained by the production method according to the present invention.
[FIG. 3] shows a measurement result of quantum yields in splitting water by the rhodium-doped strontium titanate particles obtained by the production method according to the present invention.

DESCRIPTION OF THE INVENTION

Method for producing metal oxide particles

The method for producing the metal oxide particles according to the present invention is a so-called thermal decomposition method (an aqueous solution thermal decomposition method). "The aqueous solution thermal decomposition method" is a method in which water as a solvent is evaporated by heating an aqueous solution containing a water-soluble transition metal complex, thereby triggering the dehydration polycondensation reaction among the transition metal complexes, followed by firing the reactant to obtain crystallized particles. In the present invention, because a transition metal complex having a tendency to be mildly hydrolyzed, that will be described later, is used as a raw material, it is possible to dissolve the transition metal complex into water stably. Then, in the present invention, when the aqueous solution containing the transition metal complex which can be dissolved into water stably is heated, water as the solvent is evaporated to mildly cause the dehydration polycondensation reaction among the transition metal complexes. Furthermore, when the transition metal complexes is combined with water-dispersible organic polymer particles described later, the generation speed of crystal nuclei during thermal decomposition becomes slower; and as a result, it is considered to acquire a merit that crystals can be refined.

Preparation of aqueous dispersion comprising water-soluble transition metal complex and water-dispersible organic polymer particles Preparation of water-soluble transition metal complex

The aqueous dispersion used in the present invention contains the water-soluble transition metal complex and the water-dispersible organic polymer particles. This aqueous dispersion can be obtained, for example, in such a way that an aqueous solution containing the water-soluble transition metal complex is prepared, and this aqueous solution is mixed with the water-dispersible organic polymer particles.

The water-soluble transition metal complex used in the present invention can be preferably obtained by the method in which one transition metal compound (precursor) selected from a titanium compound, a tantalum compound, and a niobium compound is used as the raw material, and then, a hydrophobic complexing agent and a hydrophilic complexing agent are bonded with the transition metal ion successively.

Specifically, by mixing the transition metal compound and the hydrophobic complexing agent with stirring, the transition metal-hydrophobic complexing agent complex is obtained. By gradually adding this transition metal-hydrophobic complexing agent complex to an aqueous solution containing the hydrophilic complexing agent with stirring, the aqueous solution containing the transition metal complex can be obtained. The reaction can be carried out at the temperature of 0°C or higher, preferably around the room temperature (ca. 20°C). According to another preferred embodiment, in order to facilitate the bond formation between the transition metal ion and the hydrophobic complexing agent and the hydrophilic complexing agent, they are stirred with heating at the temperature of 40 to 90°C; and in this way, the aqueous solution containing more stable transition metal complex can be prepared. The aqueous solution containing the transition metal complex prepared in the way as mentioned above does not form deposition even after storage at room temperature for a period of one year or more, and thus has excellent stability.

The solvent for the formation of the complex may be water. A water-soluble organic solvent may be used as the solvent. By virtue of this, the solubility of the transition metal complex may be enhanced. As to the water-soluble organic solvent, methanol, ethanol, n-propanol, isopropanol, cellosolve solvents, and carbitol solvents may be suitably used.

The mixing ratios of various raw materials in the aqueous solution containing the water-soluble transition metal complex are not particularly limited, however, the mixing ratios relative to 100 g of water are preferably in the range as follows: 0.01 to 0.2 moles, more preferably 0.02 to 0.1 moles for the transition metal compound containing one transition metal atom; 0.005 to 0.4 moles, more preferably 0.015 to 0.15 moles for the hydrophobic complexing agent; and 0.05 to 2 moles, more preferably 0.1 to 1 mole for the hydrophilic complexing agent. By mixing them at these ratios, the transition metal compound can be readily dissolved, and a high degree of crystallization and refinement of particles after thermal decomposition are possible. And the molar ratio of the hydrophobic complexing agent to the transition metal compound is preferably in the range of 0.5 to 2 moles, more preferably 0.8 to 1.2 moles, relative to 1 mole of the transition metal compound containing one transition metal atom. Within this range, progress of the hydrolysis reaction of the transition metal compound and decrease of the water-solubility due to enhancement of the hydrophobicity of the molecule can be suppressed. The molar ratio of the hydrophilic complexing agent to the transition metal compound is preferably in the range of 0.3 to 15 moles, more preferably 0.5 to 10 moles, relative to 1 mole of the transition metal compound containing one transition metal atom. Within this range, progress of the hydrolysis reaction of the transition metal compound can be suppressed, and the solubility of the transition metal compound into water can be enhanced. In addition, pH of the aqueous solution containing the water-soluble transition metal complex is preferably in the range of 2 to 6, more preferably in the range of 3 to 5. Within this range, stability of each ion in the aqueous solution can be maintained so that the refinement of particles after crystallization is possible. Moreover, coarsening of the crystals due to promotion of the hydrolysis polycondensation under a strong acid condition or a strong base atmosphere can be suppressed.

Transition metal ion

The transition metal ions usable in the present invention are a titanium ion, a tantalum ion, and a niobium ion.

The source of the titanium ion is not particularly limited; however, a titanium alkoxide and a titanium chloride can be preferably used. Illustrative example of the titanium alkoxide usable includes titanium tetramethoxide, titanium tetraethoxide, titanium tetra-n-propoxide, titanium tetra-iso-propoxide, and titanium tetra-n-butoxide. Illustrative example of the titanium chloride usable includes titanium tetrachloride, titanium tetrafluoride, and titanium tetrabromide.

The source of the tantalum ion is not particularly limited; however, a tantalum alkoxide and a tantalum chloride can be preferably used. Illustrative example of the tantalum alkoxide usable includes tantalum pentamethoxide, tantalum pentaethoxide, tantalum penta-n-propoxide, tantalum penta-iso-propoxide, and tantalum penta-n-butoxide. Illustrative example of the tantalum chloride usable includes tantalum pentachloride, tantalum pentafluoride, and tantalum pentabromide.

The source of the niobium ion is not particularly limited; however, a niobium alkoxide and a niobium chloride can be preferably used. Illustrative example of the niobium alkoxide usable includes niobium pentamethoxide, niobium pentaethoxide, niobium penta-n-propoxide, niobium penta-iso-propoxide, and niobium penta-n-butoxide. Illustrative example of the niobium chloride usable includes niobium pentachloride, niobium pentafluoride, and niobium pentabromide.

Hydrophobic complexing agent

The hydrophobic complexing agent usable in the present invention is the one which can coordinate with a titanium ion, a tantalum ion, or a niobium ion. According to a preferred embodiment of the present invention, the hydrophobic complexing agent usable in the present invention is coordinated with these hydrolysable transition metal ions to render the transition metal ions complexed so that hydrolysis of the transition metal compounds can be suppressed. By virtue of this, hydrolysis reaction of the transition metal complex can be made milder so that the transition metal compound can be dissolved in water more stably.

The hydrophobic complexing agent usable in the present invention is the one whose hydrophobic portion is exposed to a solvent phase side upon coordinating with the transition metal ion. Illustrative example of the hydrophobic complexing agent suitably usable includes a diketone compound and a catechol compound. As to the diketone compound, a diketone compounds represented by the general formula $Z_1$-CO-$CH_2$-CO-$Z_2$ wherein $Z_1$ and $Z_2$ each represents independently an alkyl group or an alkoxy group can be used suitably. Illustrative example of the diketone compound which is represented by the foregoing general formula and can be suitably used includes acetylacetone, ethyl acetoacetate, propyl acetoacetate, and butyl acetoacetate. Illustrative example of the catechol compound which can be suitably used includes ascorbic acid, pyrocatechol, and tert-butyl catechol. Among these hydrophobic complexing agents, acetylacetone or ethyl acetoacetate, both having extremely high complexing ability with the transition metal ions in an aqueous solution, can be used more preferably. By utilizing the hydrophobic complexing agent, polymerization among molecules due to dehydration polycondensation reaction which takes place among the molecules when a hydrophilic hydroxyl group is exposed to the solvent phase side can be suppressed, and therefore, it can be considered that the refinement of the crystal nuclei during thermal decomposition as well as the refinement of particles after thermal decomposition reaction can be attained.

Hydrophilic complexing agent

The hydrophilic complexing agent usable in the present invention is the one which can coordinate with a titanium ion, a tantalum ion, or a niobium ion and has higher hydrophilicity than the foregoing hydrophobic complexing agent. By using the hydrophilic complexing agent like this, not only the hydrolysis reaction of the transition metal compound can be suppressed but also the solubility of the transition metal compound into water can be enhanced. In the present invention, as the hydrophilic complexing agent, a carboxylic acid can be suitably used. More preferably, a carboxylic acid represented by the general formula $R^1$-COOH wherein $R^1$ represents a $C_{1-4}$ alkyl group, and a hydroxy acid or a dicarboxylic acid, both having 1 to 6 carbon atoms, can be used. Specific example of the hydrophilic complexing agent includes water-soluble carboxylic acids such as acetic acid, lactic acid, citric acid, butanoic acid, and malic acid. Hydrophilic complexing agent is more preferably acetic acid or lactic acid.

In the case that the water-soluble transition metal complex usable in the present invention is a water-soluble titanium complex, according to a preferred embodiment of the present invention, the water-soluble titanium complexes described in JP 2012-056947 A may be used. Specifically, the titanium complex whose coordination number with the titanium ion is 6, comprising the titanium ion and ligands coordinated therewith; the ligands being : a first ligand which functions as a divalent ligand and is represented by the general formula $Z_1$-CO-$CH_2$-CO-$Z_2$ wherein $Z_1$ and $Z_2$ each represents independently an alkyl group or an alkoxy group, a second ligand which is a carboxylate, a third ligand and a fourth ligand each being independently selected from the group consisting of an alkoxide and a hydroxylated ion, and a fifth ligand which is $H_2O$, can be used.

Water-dispersible organic polymer particles

In the method for producing the metal oxide particles according to the present invention, the aqueous dispersion contains the water-soluble transition metal complex described above and the water-dispersible organic polymer particles.

By addition of the water-dispersible organic polymer particles, fine metal oxide particles can be obtained, so that the secondary particles formed by aggregation of these particles become porous. A mechanism through which such fine primary particles are obtained and, consequently, the porosity of secondary particles obtained by the aggregation thereof becomes high is considered as follow. However, the scope of the present invention is not limited to this mechanism. The addition of the water-dispersible organic polymer particles allows the water-soluble transition metal complex, which is polar molecule, to be adsorbed to the surface of the polymer particles polarized in water. In a process of heat crystallization, the complex present on the surface of the polymer particles is hydrolyzed to produce crystal nuclei of metal oxide particles of central metal. Since the crystal nuclei on the surface of the polymer particles are present with a physical distance therebetween, there is little opportunity of bonding among the crystal nuclei and, consequently, the growth of crystals proceeds slowly, leading to a small primary particle diameter of the metal oxide particles. Further, although the formed metal oxide particles are bound to one another as a result of the disappearance of polymer particles by thermal decomposition, the presence of the polymer particles suppresses the aggregation of the metal oxide particles, resulting in an increase in void ratio of secondary particles as an aggregate, that is, an increase in porosity.

According to a preferred embodiment of the present invention, the water-dispersible organic polymer particles usable in the present invention are spherical latex particles or oil-in-water dispersion type (O/W type) emulsions. An oil-in-water dispersion type (O/W type) emulsion is more preferred. By virtue of this, the organic polymer particles can be mixed readily with the aqueous solution containing the water-soluble transition metal complex; and therefore, the transition metal complex can be preferentially adsorbed onto the surface of the polymer particles. As a result, the refinement of the metal oxide particles after heat crystallization is possible.

In the method for producing the metal oxide particles according to the present invention, the water-dispersible organic polymer particles are preferably those which do not retain a residue of amorphous carbon and so forth, which is a residue of the organic polymer particles after heat crystallization at 600°C or above. As to the water-dispersible organic polymer particles like this, polymer obtained by polymerization of a monomer unit, such as styrene based polymer particles, acryl based polymer particles, urethane based polymer particles, and epoxy based polymer particles, as well as copolymer particles containing a plurality monomer units such as acryl-styrene based polymer particles may be suitably used.

In the method for producing the metal oxide particles according to the present invention, the dispersed particle diameter of the oil-in-water dispersion type (O/W type) emulsion in the dispersion is preferably 10 to 1000 nm, more preferably 30 nm or more to 300 nm or less, still more preferably 50 nm or more to 300 nm or less. When the dispersed particle diameter is within this range, the secondary particle congregating the metal oxide particles having small primary particle diameter in high-density and having enhanced porosity can be formed.

In the method for producing the metal oxide particles according to the present invention, the amount of the water-dispersible organic polymer particles is preferably in the range of 0.1 or more times to 50 or less times, more preferably in the range of 1 or more times to 20 or less times, still more preferably in the range of 3 or more times to 15 or less times, as much as the weight of the metal oxide after heat crystallization. When the water-dispersible organic polymer particles are added to the aqueous solution containing the water-soluble metal complex in such an amount, aggregation of the metal oxide particles can be suppressed after heat crystallization, so that the primary particle diameter thereof can be refined.

Metal ion

In the method for producing the metal oxide particles according to the present invention, the water-soluble transition metal complex may contain, together with the transition metal ion thereof such as $Ti^{4+}$, $Ta^{5+}$, or $Nb^{5+}$, a metal ion other than the transition metal ion. By virtue of this, the catalytic ability of the metal oxide particles obtained by the production method of the present invention can be enhanced, and also the crystal structure thereof can be stabilized. This metal ion is a metal ion corresponding to A in the later-mentioned composite metal oxide ($A_xB_yO_z$). As a raw material of these metal ions, the precursor which contains these metal ions may be used. The raw material is preferably a metal salt containing an anion which can be completely decomposed and evaporated by high-temperature firing during heat crystallization. Specifically, chloride salts, nitrate salts, acetate salts, citrate salts, lactate salts, carbonate salts, alkoxides, and so forth of these metals may be used. For example, when the metal oxide particles obtained by the production method of the present invention are rhodium-doped strontium titanate particles, the mixing ratio of the strontium compound therein is preferably 1 to 1.1 times, in terms of mole, as much as that of the metal titanium. Within this range, evaporation of the strontium compound during firing at high temperature can be suppressed, and thus, the metal oxide particles having the composition ratio extremly close to the stoichiometric ratio can be synthesized.

Drying step to produce dried body

In the method for producing the metal oxide particles according to the present invention, the aqueous dispersion which contains the water-soluble transition metal complex and the water-dispersible organic polymer particles is dried, by heating if necessary, to obtain the dried body. The drying temperature of the aqueous dispersion is preferably low at temperature of 200°C or lower.

Firing step of firing dried body

Next, in the method for producing the metal oxide particles according to the present invention, the dried body is fired. By firing the dried body, the metal oxide particles can be obtained. The firing temperature of the dried body is preferably in the range of 700°C or higher to 1100°C or lower, more preferably in the range of 800°C or higher to 1100°C or lower, still more preferably in the range of 900°C or higher to 1050°C or lower. Within this range of temperature, while thermally decomposing the water-dispersible organic polymer particles, metal oxide particles with high purity can be highly crystallized. Moreover, in the metal oxide particles obtained by the production method according to the present invention, light absorption derived from oxygen defect described later can be reduced. In addition, the drying step and the firing step may be carried out continuously.

In the method for producing the metal oxide particles according to the present invention, it is preferable to arrange a calcining step to calcine the dried body before firing step. In this way, during crystallization, while suppressing the growth of the crystal grain, a number of fine crystal nuclei can be generated. As a resultt, in the method of the present invention, metal oxide particles that are fine and have high crystallinity can be produced from the water-soluble transition metal complex as a raw material. Before firing, it is more preferable to calcining at a lower temperature than firing temperature in the firing step. In this way, while suppressing growth of the crystal grain, generation of the crystal nuclei can be accelerated. The calcining temperature is preferably in the range of 400°C or higher to below 700°C, more preferably in the range of 450°C or higher to 600°C or lower. Within this range, fine particles can be obtained stably.

Metal oxide particles

The metal oxide particles obtained by the production method of the present invention may be a simple transition metal oxide represented by $TiO_2$, $Ta_2O_5$, and $Nb_2O_5$, and also may be a composite metal oxide represented by $A_xB_yO_z$ wherein A represents a typical metal, and B represents a transition metal selected from $Ti^{4+}$, $Ta^{5+}$, and $Nb^{5+}$.

Composite metal oxide

In the composite metal oxide obtained by the production method of the present invention, A is not particularly limited, and is preferably,for example, at least one element selected from the monovalent alkaline metals such as $Na^+$, $K^+$, $Cs^+$, and $Rb^+$; the divalent alkaline earth metals such as $Mg^{2+}$, $Ca^{2+}$, $Sr^{2+}$, and $Ba^{2+}$; the divalent zinc group such as $Pb^{2+}$, $Zn^{2+}$, and $Cd^{2+}$; and the rare earth metals such as $Sc^{3+}$, $Y^{3+}$, $La^{3+}$, $Ce^{3+}$, $Pr^{3+}$, $Nd^{3+}$, $Pm^{3+}$, $Sm^{3+}$, $Eu^{3+}$, $Gd^{3+}$, $Tb^{3+}$, $Dy^{3+}$, $Ho^{3+}$, $Er^{3+}$, $Tm^{3+}$, $Yb^{3+}$, and $Lu^{3+}$. Here, O represents oxygen. Each of x, y, and z is preferably an integer of 1 or more. More preferably, x and y each is an integer of 1 or more to 5 or less and z is an integer of 1 or more to 10 or less.
Hereunder, for each case that A is a monovalent, a divalent, or a trivalent metal ion, composition of the composite metal oxide wherein the transition metal ion is respectively tetravalent $Ti^{4+}$, pentavalent $Ta^{5+}$, or pentavalent $Nb^{5+}$, will be described.

In the case that A is a monovalent metal ion

When B is $Ti^{4+}$, the composition can be represented by $A_2B_yO_{(2+4y)/2}$ wherein y is an integer of 1 or more. When B is $Ta^{5+}$ or $Nb^{5+}$, the composition can be represented by $A_2B_yO_{(2+5y)/2}$ wherein y is an integer of 1 or more.

In the case that A is a divalent metal ion

When B is $Ti^{4+}$, the composition can be represented by $A_xB_yO_{(2x+4y)/2}$ wherein x and y each is an integer of 1 or more. When B is $Ta^{5+}$ or $Nb^{5+}$, the composition can be represented by $A_xB_yO_{(2x+5y)/2}$ wherein x and y each is an integer of 1 or more.

In the case that A is a trivalent metal ion

When B is $Ti^{4+}$, the composition can be represented by $A_xB_yO_{(3x+4y)/2}$ wherein x and y each is an integer of 1 or more. When B is $Ta^{5+}$ or $Nb^{5+}$, the composition can be represented by $A_xB_yO_{(3x+5y)/2}$ wherein x and y each is an integer of 1 or more.
According to a preferred embodiment of the present invention, the meta! oxide particles obtained by the production method of the present invention are $TiO_2$, $Ta_2O_5$, $Nb_2O_5$, $Na_2Ti_3O_9$, $Na_2Ti_4O_9$, $K_2Ti_3O_9$, $K_2Ti_4O_9$, $MgTiO_3$, $CaTiO_3$, $SrTiO_3$, $BaTiO_3$, $PbTiO_3$, $Pb(Ti, Zr)O_3$(PZT), $La_2Ti_2O_7$, $Y_2Ti_2O_7$, $Ba_2Ta_2O_7$, $LaTaO_4$, $Ba_2Nb_2O_7$, and $LaNbO_4$. Among them, $TiO_2$, $Ta_2O_5$, $Nb_2O_5$, $SrTiO_3$, $BaTiO_3$, $PbTiO_3$, $Pb(Ti, Zr)O_3$(PZT), $La_2Ti_2O_7$, $Ba_2Ta_2O_7$, and $Ba_2Nb_2O_7$ are especially preferable.
The metal oxide particles obtained by the production method of the present invention may be, other than the above simple transition metal oxides and the above composite metal oxides, metal oxide particles doped with a metal other than $Ti^{4+}$, $Ta^{5+}$, and $Nb^{5+}$. By changing the band structure of the particles through doping, electric conductivity and light absorption property of the particles can be changed. Specific example of the doping metal is not particularly limited. Preferred example of the doping metal includes transition metal ions such as $Fe^{2+}$, $Fe^{3+}$, $Co^{2+}$, $Co^{3+}$, $Mn^{3+}$, $Mn^{4+}$, $Cu^+$, $Cu^{2+}$, $Ni^{2+}$, $Ti^{4+}$, $Zr^{4+}$, $Sn^{4+}$, $V^{5+}$, $Ta^{5+}$, and $Nb^{5+}$; and precious metal ions such as $Au^{3+}$, $Ru^{2+}$, $Pt^{4+}$, $Ru^{3+}$, $Ir^{3+}$, $Rh^{3+}$, and $Rh^{4+}$. For example, as the metal oxide particles according to the present invention having $Ti^{4+}$ and doped with a metal other than $Ti^{4+}$, Rh-doped $SrTiO_3$, Ir-doped $SrTiO_3$ and Ru-doped $SrTiO_3$ are preferable. These show very high activity as visible light responsive photocatalysts.
As preferable metal oxide particles obtainable by the production method of the present invention, rhodium-doped strontium titanate may be mentioned. The composition of this metal oxide can be represented by $SrTi_{1-x}Rh_xO_3$. In the rhodium-doped strontium titanate particles, the molar ratio represented by M(rhodium) / M(titanium+rhodium) is preferably in the range of 0.001 to 0.03, more preferably in the range of 0.01 to 0.03. When the molar ratio is in this range, the increase of the amount of oxygen defect during thermal decomposition reaction that is described later can be suppressed. As a result, the particles can realize high photocatalytic activity.

Crystallinity of metal oxide particles

The metal oxide particles obtained by the production method of the present invention can simultaneously realize high crystallinity and small primary particle diameter. This allows the metal oxide particles according to the present invention to have high photocatalytic activity.

In the metal oxide particles obtained by the production method of the present invention, the generation of oxygen defect which is present in the crystals is lowered. In other words, the metal oxide particles obtained by the production method of the present invention has a low light absorbance derived from oxygen defect which is present in the crystals. Therefore, because the metal oxide particles obtained by the production method of the present invention have excellent periodicity for the crystal, the crystalline degree of the metal oxide, namely, the crystallinity thereof is high.

The metal oxide particles obtained by the production method of the present invention have higher light absorbance derived from a metal ion doped into the crystals as compared with the conventional metal oxide particles doped with the same metal. When a metal ion doped into the crystals is a rhodium ion, with regard to the effect of the valency of rhodium to crystallinity thereof, the following mechanism is considered, however, the present invention is not limited to this mechanism. Generally, rhodium is known to have the valency of divalent, trivalent, tetravalent, and pentavalent. Among them, trivalent rhodium ($Rh^{3+}$) is most stable under the conditions of room temperature and air atmosphere. When a starting raw material containing trivalent rhodium is used, it is known that when strontium titanate ($SrTiO_3$ is crystallized by firing at high temperature, sites of tetravalent titanium ($Ti^{4+}$) is doped with rhodium. In this case, when a solid solution in the crystal site of $Ti^{4+}$ is substituted with $Rh^{3+}$ to form a solid solution, oxygen defect disadvantageously occurred in order to maintain electrical neutrality. Therefore, in order to reduce this oxygen defect, it is considered that when crystal site of $Ti^{4+}$ is substituted with $Rh^{4+}$ which can maintain electrical neutrality of the crystal to form a solid solution, the crystallinity thereof can be enhanced.

Optical property of metal oxide particles

According to a preferred embodiment of the present invention, the number of oxygen defects of metal oxide particles can be determined using absorbance A (=1-spectral reflectance R) as an index. The absorbance A can be quantitatively determined by diffuse reflection spectrum measurement of powders of the particles in the ranges of ultraviolet light, visible light, and near-infrared light. Oxygen defects present in metal oxides, for example, titanium oxide cause a donor level of $Ti^{3+}$. The donor level of $Ti^{3+}$ is caused in a range of an electron energy that is lower by approximately 0.75 to 1.18 eV from the lower end of a conduction band composed of Ti-3d orbital in a band structure of titanium oxide. Further, an absorption spectrum of titanium oxide having oxygen defects is known to have a broad absorption band in a range from a visible light to a near-infrared light (Cronemeyer et al., Phys. Rev. No. 113, p1222-1225, 1959). The present inventors have now confirmed as follows. Measurement of a diffuse reflection spectrum of transition metal oxide particles obtained by the production method according to the present invention shows the transition metal oxide particles, as well as titanium oxide, have a broad absorption band in a range of a visible light to a near-infrared light. Further, it has been found that, when firing temperature is raised, the absorbance is reduced in this near-infrared light range. Based on these facts, the degree of improvement in crystallinity provided by raising the firing temperature can be quantified by measuring light absorption in a range from a visible light to a near-infrared light.

In the present invention, when the metal oxide obtained by the production method of the present invention is rhodium-doped strontium titanate particles, under the condition that absorbance $A_{315}$ at wavelength 315 nm (=1-$R_{315}$ [spectral reflectance at wavelength 315 nm]) is in the range of 0.86 to 0.87, absorbance $A_{1800}$ at wavelength 1800 nm (=1-$R_{1800}$ [spectral reflectance at wavelength 1800 nm]), which is attributed to the absorption due to oxygen defect in the crystals, is preferably 0.7 or less. In addition, absorbance at wavelength 570 nm, $A_{570}$ (=1-$R_{570}$ [spectral reflectance at wavelength 570 nm]), which is attributed to the absorption due to $Rh^{4+}$ in the strontium titanate crystals, is preferably 0.6 or more. When absorbance is in the above ranges, the metal oxide particles show high crystallinity so that excellent photocatalytic activity can be realized. In the present invention, absorbance $A_{1800}$ at wavelength 1800 nm is more preferably in the range of 0.3 or more to 0.7 or less. Also, absorbance $A_{570}$ at wavelength 570 nm is more preferably in the range of 0.6 or more to less than 0.8.

In the present invention, when the metal oxide particles obtained by the production method of the present invention is $La_2Ti_2O_7$ particles, under the condition that absorbance $A_{250}$ at wavelength 250 nm is in the range of 0.85 to 0.87, absorbance $A_{800}$ at wavelength 800 nm, which is attributed to absorption due to oxygen defect in the crystals, is preferably 0.18 or less. Within this range of the light absorbance, the metal oxide particles show high crystallinity so that excellent photocatalytic activity can be realized. Also, the $La_2Ti_2O_7$ particles of the present invention are nitrided, the particles can be converted to visible light responsive $LaTiO_2N$ photocatalyst having high activity. In the present

invention, absorbance $A_{800}$ is more preferably in the range of 0.10 to 0.17.

In the present invention, when the metal oxide particles obtained by the production method of the present invention is $Ba_2Ta_2O_7$ particles, under the condition that absorbance $A_{250}$ at wavelength 250 nm is in the range of 0.83 to 0.86, absorbance $A_{800}$ at wavelength 800 nm, which is attributed to absorption due to oxygen defect in the crystals, is preferably 0.25 or less. Within this range of absorbance, the metal oxide particles show high crystallinity so that excellent photocatalytic activity can be realized. Also, when the $La_2Ti_2O_7$ particles of the present invention are nitrided, the particles can be converted to visible light responsive $BaTaO_2N$ photocatalyst having high activity. In the present invention, absorbance $A_{800}$ is more preferably in the range of 0.11 to 0.24.

In the present invention, when the metal oxide particles obtained by the production method of the present invention is $Ta_2O_5$ particles, under the condition that absorbance $A_{250}$ at wavelength 250 nm is in the range of 0.86 to 0.87, absorbance $A_{1800}$ at wavelength 1800 nm, which is attributed to absorption due to oxygen defect in the crystals, is preferably 0.32 or less. Within this range of absorbance, the metal oxide particles show high crystallinity so that excellent photocatalytic activity can be realized. Also, when $Ta_2O_5$ particles of the present invention are nitrided, the particles can be converted to visible light responsive TaON photocatalyst having high activity. In the present invention, absorbance $A_{1800}$ is more preferably in the range of 0.20 to 0.32.

In the present invention, when the metal oxide particles obtained by the production method of the present invention is $SrTiO_3$ particles, under the condition that absorbance $A_{250}$ at wavelength 250 nm is in the range of 0.82 to 0.87, absorbance $A_{1800}$ at wavelength 1800 nm, which is attributed to absorption due to oxygen defect in the crystals, is preferably 0.3 or less. Within this range of absorbance, the metal oxide particles show high crystallinity so that excellent photocatalytic activity can be realized. Absorbance $A_{1800}$ is more preferably in the range of 0.1 to 0.3.

In the present invention, when the metal oxide particles obtained by the production method of the present invention is $BaTiO_3$ particles, under the condition that absorbance $A_{250}$ at wavelength 250 nm is in the range of 0.82 to 0.87, absorbance $A_{1800}$ at wavelength 1800 nm, which is attributed to absorption due to oxygen defect in the crystals, is preferably 0.4 or less. Within this range of absorbance, the metal oxide particles show high crystallinity so that excellent photocatalytic activity can be realized. Absorbance $A_{1800}$ is more preferably in the range of 0.1 to 0.4.

In the present invention, when the metal oxide particles obtained by the production method of the present invention is lanthanum- and rhodium-doped strontium titanate particles, under the condition that absorbance $A_{250}$ at wavelength 250 nm is in the range of 0.82 to 0.87, absorbance $A_{1800}$ at wavelength 1800 nm, which is attributed to absorption due to oxygen defect in the crystals, is preferably 0.6 or less. Within this range of absorbance, the metal oxide particles show high crystallinity so that excellent photocatalytic activity can be realized. Absorbance $A_{1800}$ is more preferably in the range of 0.1 to 0.6.

In the present invention, when the metal oxide particles obtained by the production method of the present invention is iridium-doped strontium titanate particles, under the condition that absorbance $A_{250}$ at wavelength 250 nm is in the range of 0.82 to 0.87, absorbance $A_{1800}$ at wavelength 1800 nm, which is attributed to absorption due to oxygen defect in the crystals, is preferably 0.9 or less. Within this range of absorbance, the metal oxide particles show high crystallinity so that excellent photocatalytic activity can be realized. Absorbance $A_{1800}$ is more preferably in the range of 0.5 to 0.9.

Primary particle diameter of metal oxide particles

According to the production method of the present invention, metal oxide particles having a very small primary particle diameter can be obtained. The primary particle diameter of the metal oxide particles obtained by the production method of the present invention is preferably less than 190 nm, more preferably 120 nm or less, still more preferably 70 nm or less or, 50 nm or less. Also, the primary particle diameter of the metal oxide particles obtained by the production method of the present invention is preferably 30 nm or more, or 40 nm or more. According to another embodiment of the present invention, the primary particle diameter of the metal oxide particles obtained by the production method of the present invention is preferably in the range of 30 nm or more to less than 190 nm, more preferably in the range of 30 nm or more to 120 nm or less, still more preferably in the range of 30 nm or more to 70 nm or less, 30 nm or more to 60 nm or less, or 30 nm or more to 50 nm or less. Also, the primary particle diameter of the metal oxide particles obtained by the production method of the present invention is preferably in the range of 40 nm or more to less than 190 nm, more preferably in the range of 40 nm or more to 120 nm or less, still more preferably in the range of 40 nm or more to 70 nm or less, 40 nm or more to 60 nm or less, or 40 nm or more to 50 nm or less. The metal oxide particles of the present invention can have high specific surface area by having such a very small primary particle diameter as mentioned above.

Structure of metal oxide particles

According to a preferred embodiment of the present invention, the metal oxide particles obtained by the production method of the present invention have a large specific surface area as mentioned above.

In the present invention, by using an $R_{SP}$ value of the metal oxide particles as an index, it becomes possible to identify metal oxide particles having a large surface area or powders, i.e., secondary particles, having a high porosity, wherein the powders are congregate of these particles.

The $R_{SP}$ value is an index correlated with the amount of water molecules adsorbed on the surface of particles and depending upon a surface area of particles in contact with water when the particles are dispersed in water. The metal oxide particles obtained by the production method according to the present invention can be utilized as a photocatalyst for splitting water, thus, the particles are used in contact with water. In this case, water permeates gaps among primary particles or pores within a secondary particle, and thus the surface of the particles is in contact with water. Accordingly, when the metal oxide particles obtained by the production method according to the present invention are utilized as a photocatalyst for splitting water, use of the $R_{SP}$ value as an index to determine the surface area of particles on which water is adsorbed is useful in obtaining particles having a large specific surface area. A method for the measurement of the specific surface area of particles includes a BET analysis based on nitrogen adsorption and desorption measurement, as a main conventional method. In this BET analysis, however, nitrogen is used as a probe, and the molecular diameter of nitrogen is so small that nitrogen is disadvantageously adsorbed on the surface of pores that water cannot permeate. The method for the measurement of the specific surface area by a BET analysis is not effective when the object is particles with water adsorbed thereon.

The $R_{SP}$ value is represented by the following equation. Further, the $R_{SP}$ value can be measured with a pulse NMR particle boundary evaluation apparatus, for example, "Acorn area," manufactured by Nihon Rufuto Co., Ltd.

$$R_{SP}=(R_b-R_{av})/R_b \quad (1)$$

wherein $R_{av}$ is a mean relaxation time constant. The relaxation time constant is an inverse number of a relaxation time of water in contact with or adsorbed on the surface of particles when the particles are dispersed in water. The mean relaxation time constant is a mean value of obtained relaxation time constants.

$R_b$ is a relaxation time constant of blank water not containing particles.

The larger the $R_{sp}$ value, the larger the interaction of the surface of particles with water. This means that a large $R_{sp}$ indicates a large contact area between particles and water, and thus a large specific surface area of particles.

When the metal oxide particles obtained by the production method of the present invention are rhodium-doped strontium titanate particles, the $R_{SP}$ value thereof is preferably 0.86 or more, more preferably 0.88 or more. Also, the $R_{SP}$ value is preferably 10 or less, more preferably 5 or less. In the rhodium-doped strontium titanate particles, it is considered that titanium, which has high affinity to water, is present on surface thereof. As a consequence, it is considered that comparatively large amount of hydroxyl groups are present on the surface of the particles and thus that wettability of the particles is comparatively high. Therefore, it is considered that the obtained $R_{SP}$ value also becomes comparatively high.

When the metal oxide particles obtained by the production method of the present invention are $La_2Ti_2O_7$ particles, the $R_{SP}$ value thereof is preferably 0.4 or more. The $R_{SP}$ value is also preferably 5 or less. In the $La_2Ti_2O_7$ particles, it is considered that the affinity between water and Ti on the surface of the particles becomes small due to the effect of lanthanum having a large ionic radius. As a consequence, it is considered that the number of hydroxyl groups on the surface of the particles is small and thus that wettability of the particles is low. Therefore, it is considered that the obtained $R_{SP}$ value also becomes lower as compared with other metal oxide particles.

When the metal oxide particles obtained by the production method of the present invention are $Ba_2Ta_2O_7$ particles, the $R_{SP}$ value thereof is preferably 0.43 or more. The $R_{SP}$ value is also preferably 5 or less. Because the $Ba_2Ta_2O_7$ particles have an amorphous structure, it is considered that the number of hydroxyl groups on the surface of the particles is large. As a consequence, it is considered that the wettability of the particles is comparatively high. Therefore, it is considered that the obtained $R_{SP}$ value also becomes comparatively high.

Use of metal oxide particles

According to a preferred embodiment of the present invention, the metal oxide particles obtained by the production method of the present invention can be used as a photocatalyst. According to a more preferred embodiment of the present invention, the metal oxide particles of the present invention can be used as a photocatalyst for splitting water. In this case, in order to promptly occur the generation of hydrogen and oxygen, it is preferable that a co-catalyst is supported on the surface of the particles. As co-catalysts, metal particles such as platinum, ruthenium, iridium, rhodium, and so forth, and metal oxide particles such as chromium oxide, rhodium oxide, iridium oxide, ruthenium oxide, and so forth may be preferably used. In addition, a mixture of metal particles with metal oxide particles may be used. When a co-catalyst is supported, the activation energy in the oxidation reaction and reduction reaction of water can be lowered, so that hydrogen and oxygen can be generated promptly.

Furthermore, according to a preferred embodiment of the present invention, through dissolving an appropriate redox pair such as $Fe^{2+}/Fe^{3+}$, $I^-/I_3^-$, $I^-/IO_3^-$, $Co^{2+}/Co^{3+}$, etc., together with photocatalyst for oxygen generation into water, a Z-scheme system can be configured. This Z-scheme system can completely split water under visible light irradiation. As photocatalysts for oxygen generation, preferably, $BiVO_4$ and $WO_3$ are mentioned. Accordingly, the present invention is able to provide a method for splitting water, comprising an irradiation of visible light to rhodium-doped strontium titanate particles which are in contact with water.

EXAMPLES

The present invention will be explained in more detail by the following examples. The scope of the present invention, however, is not limited thereto.

Examples 1 to 6

Preparation of rhodium-doped strontium titanate particles

0.02 mol (2.003 g) of acetyl acetone (manufactured by Wako Pure Chemical Industries, Ltd.) as a hydrophobic complexing agent was added to a 20-mL sample bottle, and 0.02 mol (5.684 g) of titanium tetra-iso-propoxide (manufactured by Wako Pure Chemical Industries, Ltd.) was added thereto with stirring at room temperature to prepare a yellow aqueous solution containing a water-soluble titanium-acetyl acetone complex. The solution containing the water-soluble titanium-acetyl acetone complex was added to 50 mL of a 0.32 mol/L aqueous acetic acid solution with stirring at room temperature to prepare a mixture. The mixture was stirred at room temperature for about one hour and then at 60°C for about one hour to prepare a yellow and transparent aqueous solution containing a water-soluble titanium complex.

A portion (10 g) of the aqueous solution containing the water-soluble titanium complex prepared above was then taken (containing 3.41 mmol of titanium in terms of metallic titanium). A solution of 3.75 mmol (0.84 g) of strontium acetate 0.5 hydrate (manufactured by Wako Pure Chemical Industries, Ltd.) and 0.70 g of lactic acid (manufactured by Wako Pure Chemical Industries, Ltd.) as a hydrophilic complexing agent dissolved in 3.16 g of distilled water was added to the aqueous complex solution to prepare a mixed aqueous solution, and, further, a 5 wt% aqueous solution of rhodium trichloride (manufactured by Wako Pure Chemical Industries, Ltd.) was added to the mixed aqueous solution so that the concentration in terms of the molar ratio of M (rhodium) to M (titanium + rhodium) was the molar ratio shown in Table 1, followed by stirring at room temperature for 3 hours. Thus, the mixed aqueous solution containing a precursor of an orange-colored transparent rhodium-doped strontium titanate was obtained. The mixed aqueous solution had a pH value of about 4.

Further, an acryl-styrene-based O/W emulsion ("EC-905EF," dispersed particle diameter of 100 to 150 nm, pH: 7 to 9, solid content of 49 to 51%; manufactured by DIC Corporation) was added as water-dispersible organic polymer particles to the mixed aqueous solution so that the solid amount of acryl-styrene-based O/W emulsion was five times than that of rhodium-doped strontium titanate obtained after firing in terms of weight ratio, thereby preparing a dispersion.

The dispersion thus prepared was dried at 80°C for one hour, and the dried product was fired at the tempreture shown in Table 1, (900 to 1050°C), for 10 hours for high-temperature crystallization to prepare a powder of rhodium-doped strontium titanate particles. Preparation conditions and properties of the obtained powders are shown in Table 1.

With regard to the sample of Example 6, it was studied that the powders obtained after crystallization by firing at 1000°C for 10 hours were finely dispersed with the planetary mill ("Premium Line P-7"; manufactured by Fritsch GmbH). Dispersing conditions were as follows: 1 g of rhodium-doped strontium titanate powders, 4 g of ethanol, and 1 g of zirconia beads (0.5 mm$\phi$) were added to a pot made of zirconia (volume of 45 mL) to obtain a mixture. The mixture was subjected to an automatic revolving dispersing treatment at 700 rpm for 30 minutes. After the dispersing treatment, a slurry having powders dispersed therein was recovered through suction filtration by using a resin-made filter with the mesh diameter of 0.1 mm. This slurry was dried at room temperature for 10 hours to obtain rhodium-doped strontium titanate powders with dispersing treatment.

Example 7

Rhodium-doped strontium titanate particles were prepared in the same production method as in Examples 1 to 6, except that an aqueous dispersion of 50% by weight of acryl based latex particles (Chemisnow 1000: average particle diameter of about 1000 nm, manufactured by Soken Chemical & Engineering Co., Ltd.) was used in place of the acryl-styrene O/W type emulsion. Preparation conditions and properties of the obtained powders are shown in Table 1.

Example 8

Rhodium-doped strontium titanate particles were obtained in the same production method as in Examples 1 to 6, except that an aqueous dispersion of 50% by weight of the acryl based latex particles (Chemisnow 300: average particle diameter of about 300 nm, manufactured by Soken Chemical & Engineering Co., Ltd.) was used in place of the acryl-styrene O/W type emulsion, the same procedure as that of Examples 1 to 6 was repeated to obtain the rhodium-doped strontium titanate particles. Preparation conditions and properties of the obtained powders are shown in Table 1.

Comparative Examples 1 to 3

Preparation of rhodium-doped strontium titanate particles

Rhodium-doped strontium titanate was prepared by a solid-phase reaction method. Specifically, powders of strontium carbonate (manufactured by Kanto Chemical Co., Inc.), titanium oxide (manufactured by Soekawa Rikagaku, Ltd., rutile-type), and rhodium oxide ($Rh_2O_3$: manufactured by Wako Pure Chemical Industries, Ltd.) were mixed together at a molar ratio of Sr : Ti : Rh is 1.07 : 1-x : x, wherein x is each doping ratio of rhodium shown in Table 1. The mixture was fired at the temperature shown in Table 1 for 10 hours to obtain powders composed of rhodium-doped strontium titanate particles. Preparation conditions and properties of the obtained powders are shown in Table 1.

Examples 9 to 13

Powders composed of rhodium-doped strontium titanate particles were prepared in the same manner as in Example 1, except that each firing temperature was changed to the temperature shown in Table 1. Preparation conditions and properties of the obtained powders are shown in Table 1.

Example 14

Powders composed of rhodium-doped strontium titanate particles were prepared in the same production method as in Examples 1 to 6, except that the dispersion was dried at 80°C for one hour, and the dried product was calcining at 500°C for 1 hour, and the calcined product was fired at 1000°C for 10 hours for high-temperature crystallization. Preparation conditions and properties of the obtained powders are shown in Table 1.

Comparative Example 4

Rhodium-doped strontium titanate was prepared by a complex polymerization method. Specifically, powders composed of rhodium-doped strontium titanate particles were prepared in the same preparation method in Example 2, except that titanium peroxocitrate complex (TAS-FINE; manufactured by Furuuchi Chemical Corp.) which is a commercially available water-soluble titanium complex was used in place of the water-soluble titanium complex. Preparation conditions and properties of the obtained powders are shown in Table 1.

Comparative Example 5

Rhodium-doped strontium titanate was prepared by a lactic acid polymerization method. Specifically, in the preparation method of Example 2, a titanium complex having lactic acid as a ligand was used in place of the water-soluble titanium complex. Namely, titanium isopropoxide (0.01 mole, manufactured by Wako Pure Chemical Industries, Ltd.) and lactic acid (0.02 mole, manufactured by Wako Pure Chemical Industries, Ltd.) were added to 100 g of distilled water, and then, the resulting mixture was stirred at room temperature for 1 week to prepare an aqueous solution in which titanium lactate complex is dissolved in water. Powders composed of rhodium-doped strontium titanate particles were prepared in the same manner as in Example 2, except that the aqueous solution containing this titanium lactate complex was used in place of the aqueous solution containing the water-soluble titanium complex. Preparation conditions and properties of the obtained powders are shown in Table 1.

Comparative Example 6

Rhodium-doped strontium titanate particles were prepared in the same production method as in Examples 1 to 6, except that an aqueous solution containing 30% by weight of polyallylamine (manufactured by Wako Pure Chemical Industries, Ltd.) that is a water-soluble cationic polymer was used in place of the acryl-styrene O/W type emulsion. Preparation conditions and properties of the obtained powders are shown in Table 1.

Comparative Example 7

Rhodium-doped strontium titanate particles were prepared in the same production method as in Examples 1 to 6, except that the acryl-styrene O/W type emulsion was not added. Preparation conditions and properties of the obtained powders are shown in Table 1.

[Table 1]

| Sample | Composition | Production method | Rh doping ratio | Firing temperature (°C) | Dispersing treatment | Absorbance A @570 nm | Absorbance A @1800 nm | Primary particle diameter (nm) | $R_{sp}$ Value by pulse NMR |
|---|---|---|---|---|---|---|---|---|---|
| Example 1 | Rh-Doped SrTiO$_3$ | Aq solution thermal decomposition | 0.02 | 900 | No | 0.627 | 0.65 | 45 | 1.4 |
| Example 2 | Rh-Doped SrTiO$_3$ | Aq. solution thermal decomposition | 0.02 | 1000 | No | 0.648 | 0.65 | 45 | 0.89 |
| Example 3 | Rh-Doped SrTiO$_3$ | Aq. solution thermal decomposition | 0.02 | 1000 | No | 0.648 | 0.65 | 45 | 0.89 |
| Example 4 | Rh-Doped SrTiO$_3$ | Aq. solution thermal decomposition | 002 | 1000 | No | 0.648 | 0.65 | 45 | 0.89 |
| Example 5 | Rh-Doped SrTiO$_3$ | Aq solution thermal decomposition | 0.02 | 1000 | No | 0.648 | 0.65 | 45 | 0.89 |
| Example 6 | Rh-Doped SrTiO$_3$ | Aq. solution thermal decomposition | 0.02 | 1000 | Yes | 0.621 | 0.694 | 45 | 1.5 |
| Example 7 | Rh-Doped SrTiO$_3$ | Aq. solution thermal decomposition | 002 | 1000 | No | 0.755 | 0.551 | 65 | |
| Example 8 | Rh-Doped SrTiO$_3$ | Aq. solution thermal decomposition | 0.02 | 1000 | No | 0.771 | 0.488 | 65 | |
| Comparative Example 1 | Rh-Doped SrTiO$_3$ | Solid phase reaction method | 002 | 1000 | No | 0.774 | 0.652 | 190 | 0.46 |
| Comparative Example 2 | Rh-Doped SrTiO$_3$ | Solid phase reaction method | 0.02 | 1050 | No | 0.804 | 0.575 | 220 | |

(continued)

| Sample | Composition | Production method | Rh doping ratio | Firing temperature (°C) | Dispersing treatment | Absorbance A @570 nm | Absorbance A @1800 nm | Primary particle diameter (nm) | $R_{sp}$ Value by pulse NMR |
|---|---|---|---|---|---|---|---|---|---|
| Comparative Example 3 | Rh-Doped SrTiO$_3$ | Solid phase reaction method | 0.02 | 1100 | No | 0.8 | 0.594 | 260 | |
| Example 9 | Rh-Doped SrTiO$_3$ | Aq. solution thermal decomposition | 0.02 | 500 | No | 0.568 | 0.629 | 40 | |
| Example 10 | Rh-Doped SrTiO$_3$ | Aq. solution thermal decomposition | 0.02 | 600 | No | 0.522 | 0.693 | 30 | |
| Example 11 | Rh-Doped SrTiO$_3$ | Aq. solution thermal decomposition | 002 | 700 | No | 0.525 | 0.716 | 30 | |
| Example 12 | Rh-Doped SrTiO$_3$ | Aq. solution thermal decomposition | 0.02 | 800 | No | 0.538 | 0.677 | 40 | 1.47 |
| Example 13 | Rh-Doped SrTiO$_3$ | Aq. solution thermal decomposition | 0.02 | 1100 | No | 0.775 | 0.471 | 120 | |
| Example 14 | Rh-Doped SrTiO$_3$ | Aq. solution thermal decomposition | 002 | 1000 | No | 0.685 | 0.59 | 40 | |
| Comparative Example 4 | Rh-Doped SrTiO$_3$ | Complex polymerization method | 0.02 | 1000 | No | 0.773 | 0.587 | 500 | |
| Comparative Example 5 | Rh-Doped SrTIO$_3$ | Lactic acid polymerization method | 0.02 | 1000 | No | 0.665 | 0.656 | 300 | 0.85 |
| Comparative Example 6 | Rh-Doped SrTiO$_3$ | Aq. solution thermal decomposition | 0.02 | 1000 | No | 0.819 | 0.444 | 100 | |

(continued)

| Sample | Composition | Production method | Rh doping ratio | Firing temperature (°C) | Dispersing treatment | Absorbance A @570 nm | Absorbance A @ 1800 nm | Primary particle diameter (nm) | $R_{sp}$ Value by pulse NMR |
|---|---|---|---|---|---|---|---|---|---|
| Comparative Example 7 | Rh-Doped $SrTiO_3$ | Aq. solution thermal decomposition | 0.02 | 1000 | No | 0.662 | 0.65 | 80 | 0.62 |

Examples 15 to 19

Preparation of $La_2Ti_2O_7$ particles

0.02 mole (2.003 g) of acetyl acetone (manufactured by Wako Pure Chemical Industries, Ltd.) as a hydrophobic complexing agent was added to a 20-mL sample bottle, and 0.02 mole (5.684 g) of titanium tetra-iso-propoxide (manufactured by Wako Pure Chemical Industries, Ltd.) was added thereto with stirring at room temperature to prepare a yellow aqueous solution containing a water-soluble titanium-acetyl acetone complex.

A portion (10 g) of the aqueous solution containing the water-soluble titanium acetyl acetone complex was then taken. Then, a solution of 0.0034 mole (1.477 g) of lanthanum nitrate hexahydrate (manufactured by Wako Pure Chemical Industries, Ltd.) and 0.704 g of lactic acid (manufactured by Wako Pure Chemical Industries, Ltd.) dissolved in 2.523 g of distilled water was added to this aqueous complex solution so that the concentration of titanium in terms of mole of the solution is the same as that of the aqueous complex solution. Then, an aqueous lanthanum solution having pH adjusted to 3.5 by adding an ammonia water was gradually added with stirring to prepare an aqueous solution in which titanium and lanthanum were dissolved.

Furthermore, an acryl-styrene based O/W type emulsion ("EC-905EF": dispersed particle diameter of 100 to 150 nm, pH: 7 to 9, solid content of 49 to 51%; manufactured by DIC Corporation) was added as water-dispersible organic polymer particles to the aqueous solution such that the solid amount of the acryl-styrene based O/W type emulsion was 5 times as much as that of $La_2Ti_2O_7$ obtained after firing in terms of weight ratio, thereby preparing a dispersion.

10 g of the dispersion thus obtained was developed flatly on a borosilicate glass plate having a thickness of 1 cm (14 cm square), and then the product was dried at 80°C for 1 hour. Dried powders thus obtained were crushed by a mortar, and then fired for 2 or 10 hours at the temperature shown in Table 2 (700 to 1000°C) for high temperature crystallization to prepare powders composed of $La_2Ti_2O_7$ particles. Preparation conditions and properties of the obtained powders are shown in Table 2.

Example 20

Preparation of $La_2Ti_2O_7$ particles

Powders composed of $La_2Ti_2O_7$ particles were prepared in the same manner as in Example 15, except that firing temperature was changed to 600°C. Preparation conditions and properties of the obtained powders are shown in Table 2.

Comparative Example 8

$La_2Ti_2O_7$ particles were prepared by a solid-phase reaction method. Specifically, powders of lanthanum hydroxide (manufactured by Shin-Etsu Chemical Co., Ltd.) and powders of rutile-type titanium oxide (manufactured by Soekawa Chemical Co., Ltd.) were mixed together at a molar ratio of La : Ti=1 : 1. The resulting mixture was manually kneaded by using an agate mortar for 10 minutes, followed by firing at 1000°C for 10 hours to prepare $La_2Ti_2O_7$ powders. Preparation conditions and properties of the obtained powders are shown in Table 2.

[Table 2]

| Sample | Composition | Production method | Firing temperature (°C) | Firing time | Absorbance A | Absorbance A | Primary particle diameter | $R_{sp}$ Value by pulse NMR |
|---|---|---|---|---|---|---|---|---|
| | | | | (hour) | @800 nm | @250 nm | (nm) | |
| Example 15 | $La_2Ti_2O_7$ | Aq solution thermal decomposition | 1000 | 10 | 01177 | 0.858 | 50 | |
| Example 16 | $La_2Ti_2O_7$ | Aq solution thermal decomposition | 1000 | 2 | 01194 | 0.8566 | 45 | |
| Example 17 | $La_2Ti_2O_7$ | Aq solution thermal decomposition | 900 | 2 | 0.1614 | 0.8588 | 45 | |
| Example 18 | $La_2Ti_2O_7$ | Aq solution thermal decomposition | 800 | 2 | 01679 | 0.8637 | 40 | 0 51 |
| Example 19 | $La_2Ti_2O_7$ | Aq solution thermal decomposition | 700 | 2 | 0.1623 | 0.866 | 40 | |
| Example 20 | $La_2Ti_2O_7$ | Aq solution thermal decomposition | 600 | 2 | 0.2085 | 0.867 | 35 | |
| Comparative Example 8 | $La_2Ti_2O_7$ | Solid phase reaction method | 1000 | 10 | 0 1305 | 0.855 | 200 | 0.35 |

EP 3 006 402 A1

Examples 21 to 24

Preparation of the $Ba_2Ta_2O_7$ particles

0.02 mole (2.003 g) of acetyl acetone (manufactured by Wako Pure Chemical Industries, Ltd.) as a hydrophobic complexing agent was added to a 20-mL sample bottle, and 0.02 mole (8.125 g) of tantalum pentaethoxide (manufactured by Wako Pure Chemical Industries, Ltd.) was added thereto with stirring at room temperature to prepare a yellow aqueous solution containing a water-soluble tantalum-acetylacetone complex. The solution containing this water-soluble tantalum-acetylacetone complex was added, at room temperature with stirring, to 50 mL of a 0.32 mol/L aqueous acetic acid solution to which 0.1 mole of citric acid (manufactured by Wako Pure Chemical Industries, Ltd.) was added as a hydrophilic complexing agent. After the addition, the resulting mixture was stirred at room temperature for about 1 hour to prepare an aqueous solution containing a transparent water-soluble tantalum complex (hereunder, aqueous tantalum solution).

10 g of the aqueous tantalum solution (the content of tantalum is 0.0025 mole) was gradually added to an aqueous solution of 0.0025 mole (0.663 g) of barium nitrate (manufactured by Wako Pure Chemical Industries, Ltd.) and 0.016 mole (1.44 g) of lactic acid dissolved in 7.89 g of distilled water, and then, the resulting mixture was stirred at room temperature for 24 hours to prepare an aqueous solution containing barium and tantalum (hereunder, aqueous barium-tantalum solution).

Furthermore, an acryl-styrene based O/W type emulsion ("EC-905EF": dispersed particle diameter of 100 to 150 nm, pH: 7 to 9, solid content of 49 to 51%; manufactured by DIC Corporation) was added as water-dispersible organic polymer particles to the barium-tantalum aqueous solution such that the solid amount of the acryl-styrene based O/W type emulsion was 5 times as much as that of $Ba_2Ta_2O_7$ obtained after firing in terms of weight ratio, thereby preparing a dispersion.

10 g of the dispersion thus obtained was developed on a Pyrex® glass plate (thickness of 1 mm) surrounded therearound with a silicone tape so that the surface opening portion thereof was 10 cm square. Then, the product was dried at 80°C for 1 hour, and the silicone tape was removed. Thereafter, the product was fired for 2 hours at the temperature shown in Table 3 (700 to 1000°C) for high temperature crystallization to prepare powders composed of $Ba_2Ta_2O_7$ particles. Preparation conditions and properties of the obtained powders are shown in Table 3.

Example 25

Preparation of $Ba_2Ta_2O_7$ particles:

Powders composed of $Ba_2Ta_2O_7$ particles were prepared in the same manner as in Example 21, except that firing temperature was changed to 600°C. Preparation conditions and properties of the obtained powders are shown in Table 3.

Example 26

Powders composed of $Ba_2Ta_2O_7$ particles were prepared in the same manner as in Example 21, except that firing time was changed to the time shown in Table 3. Preparation conditions and properties of the obtained powders are shown in Table 3.

Comparative Example 9

$Ba_2Ta_2O_7$ particles were prepared by a solid-phase reaction method. Specifically, powders of barium carbonate (manufactured by Wako Pure Chemical Industries, Ltd.) and powders of tantalum oxide (manufactured by Wako Pure Chemical Industries, Ltd.) were mixed together at a molar ratio of Ba : Ta=1 : 1. The resulting mixture was manually kneaded by using an agate mortar for 10 minute, followed by firing at 1000°C for 10 hours to prepare $Ba_2Ta_2O_7$ powders. Preparation conditions and properties of the obtained powders are shown in Table 3.

[Table 3]

| Sample | Composition | Production method | Firing temperature (°C) | Firing time | Absorbance A | Absorbance A | Primary particle diameter | $R_{sp}$ Value by pulse NMR |
|---|---|---|---|---|---|---|---|---|
| | | | | (hour) | @800 nm | @250 nm | (nm) | |
| Example 21 | $Ba_2Ta_2O_7$ | Aq. solution thermal decomposition | 1000 | 2 | 0 1397 | 0.8438 | 60 | |
| Example 22 | $Ba_2TaO_7$ | Aq. solution thermal decomposition | 900 | 2 | 0.1231 | 0.8458 | 50 | |
| Example 23 | $Ba_2Ta_2O_7$ | Aq. solution thermal decomposition | 800 | 2 | 0.1784 | 0.8394 | 45 | 1.52 |
| Example 24 | $Ba_2Ta_2O_7$ | Aq. solution thermal decomposition | 700 | 2 | 0.278 | 0.8364 | 40 | |
| Example 25 | $Ba_2Ta_2O_7$ | Aq. solution thermal decomposition | 600 | 2 | 0 4011 | 0.8362 | 30 | |
| Example 26 | $Ba_3Ta_2O_7$ | Aq. solution thermal decomposition | 1000 | 10 | 0.0842 | 0 8439 | 100 | |
| Comparative Example 9 | $Ba_2Ta_2O_7$ | Solid phase reaction method | 1000 | 10 | 01163 | 0.8507 | 200 | 042 |

Example 27

Preparation of strontium titanate particles

0.02 mole (2.003 g) of acetyl acetone (manufactured by Wako Pure Chemical Industries, Ltd.) as a hydrophobic complexing agent was added to a 20-mL sample bottle, and 0.02 mole (5.684 g) of titanium tetra-iso-propoxide (manufactured by Wako Pure Chemical Industries, Ltd.) was added thereto with stirring at room temperature to prepare a yellow aqueous solution containing a water-soluble titanium-acetyl acetone complex. The aqueous solution containing this water-soluble tantalum-acetylacetone complex was added to 50 mL of an aqueous solution containing 0.32 mol/L of acetic acid with stirring at room temperature. After the addition, the resulting mixture was stirred at room temperature for about 1 hour, and further at 60°C for about 1 hour to prepare a yellow and transparent aqueous solution containing a water-soluble titanium complex.

A portion (10 g) of the aqueous solution containing the water-soluble titanium complex thus prepared was then taken (containing 3.41 mmole of titanium in terms of metallic titanium). A solution of 3.75 mmole (0.84 g) of strontium acetate 0.5 hydrate (manufactured by Wako Pure Chemical Industries, Ltd.) and 0.70 g of lactic acid (manufactured by Wako Pure Chemical Industries, Ltd.) as a carboxylic acid dissolved in 3.16 g of distilled water was added to the aqueous complex solution, and then, the resulting mixture was stirred at room temperature for 3 hours. In this way, a orange and transparent aqueous solution containing the strontium titanate precursor was obtained. The pH of this aqueous solution was about 4.

Furthermore, an acryl-styrene based O/W type emulsion ("EC-905EF": dispersed particle diameter of 100 to 150 nm, pH: 7 to 9, solid content of 49 to 51%; manufactured by DIC Corporation) was added as water-dispersible organic polymer particles to the aqueous solution such that the solid amount of the acryl-styrene based O/W type emulsion was 5 times as much as that of strontium titanate obtained after firing in terms of weight ratio, thereby preparing a dispersion.

The dispersion thus obtained was dried at 80°C for 1 hour, and then fired at 1000°C for 10 hours for high temperature crystallization to prepare powders composed of strontium titanate particles. Preparation conditions and properties of the obtained powders are shown in Table 4.

Comparative Example 10

Preparation of the SrTiO$_3$ particles

SrTiO$_3$ particles were prepared by a solid-phase reaction method. Specifically, powders of strontium carbonate (manufactured by Kanto Chemical Co., Ltd.) and powders of titanium oxide (rutile type; manufactured by Soekawa Chemical Co., Ltd.) were mixed together at a molar ratio of Sr: Ti=1: 1. The resulting mixture was manually kneaded by using an agate mortar for 10 minute, followed by firing at 1000°C for 10 hours to prepare SrTiO$_3$ powders. Preparation conditions and properties of the obtained powders are shown in Table 4.

Example 28

Preparation of barium titanate particles

0.02 mole (2.003 g) of acetyl acetone (manufactured by Wako Pure Chemical Industries, Ltd.) as a hydrophobic complexing agent was added to a 20-mL sample bottle, and 0.02 mole (5.684 g) of titanium tetra-iso-propoxide (manufactured by Wako Pure Chemical Industries, Ltd.) was added thereto with stirring at room temperature to prepare a yellow aqueous solution containing a water-soluble titanium-acetylacetone complex. The aqueous solution containing this water-soluble titanium-acetylacetone complex was added to 50 mL of an aqueous solution containing 0.32 mol/L of acetic acid with stirring at room temperature. After the addition, the resulting mixture was stirred at room temperature for about 1 hour, and further at 60°C for about 1 hour to prepare a yellow and transparent aqueous solution containing a water-soluble titanium complex.

A portion (10 g) of the aqueous solution containing the water-soluble titanium complex thus prepared was then taken (containing 3.41 mmole of titanium in terms of metal titanium). A solution of 3.75 mmole of barium nitrate(manufactured by Wako Pure Chemical Industries, Ltd.) and 0.70 g of lactic acid (manufactured by Wako Pure Chemical Industries, Ltd.) dissolved in 3.16 g of distilled water was added to the aqueous complex solution, and then, the resulting mixture was stirred at room temperature for 3 hours. In this way, an orange and transparent aqueous solution containing the barium titanate precursor was obtained. The pH of this aqueous solution was about 4.

Furthermore, an acryl-styrene based O/W type emulsion ("EC-905EF": dispersed particle diameter of 100 to 150 nm, pH: 7 to 9, solid content of 49 to 51%; manufactured by DIC Corporation) was added as water-dispersible organic polymer particles to the aqueous solution such that the solid amount of the acryl-styrene based O/W type emulsion was 5 times as much as that of barium titanate obtained after firing in terms of weight ratio, thereby preparing a dispersion.

The dispersion thus prepared was dried at 80°C for 1 hour, and then fired for 10 hours at 1000°C for high temperature crystallization to prepare powders composed of barium titanate particles. Preparation conditions and properties of the obtained powders are shown in Table 4.

Comparative Example 11

Preparation of $BaTiO_3$ particles

$BaTiO_3$ particles were prepared by a solid-phase reaction method. Specifically, powders of barium carbonate (manufactured by Wako Pure Chemical Industries, Ltd.) and powders of titanium oxide (rutile type; manufactured by Soekawa Chemical Co., Ltd.) were mixed together at a molar ratio of Ba : Ti=1 : 1. The resulting mixture was manually kneaded by using an agate mortar for 10 minute, followed by firing at 1000°C for 10 hours to prepare $BaTiO_3$ powders. Preparation conditions and properties of the obtained powders are shown in Table 4.

Example 29

Preparation of lanthanum- and rhodium-doped strontium titanate particles

0.02 mole (2.003 g) of acetylacetone (manufactured by Wako Pure Chemical Industries, Ltd.) as a hydrophobic complexing agent was added to a 20-mL sample bottle, and 0.02 mole (5.684 g) of titanium tetra-iso-propoxide (manufactured by Wako Pure Chemical Industries, Ltd.) was added thereto with stirring at room temperature to prepare a yellow aqueous solution containing a water-soluble titanium-acetylacetone complex. The aqueous solution containing this water-soluble titanium-acetylacetone complex was added to 50 mL of an aqueous solution containing 0.32 mol/L of acetic acid with stirring at room temperature. After the addition, the resulting mixture was stirred at room temperature for about 1 hour, and further at 60°C for about 1 hour to prepare a yellow and transparent aqueous solution containing a water-soluble titanium complex.

A portion (10 g) of the aqueous solution containing the water-soluble titanium complex thus prepared was then taken (containing 3.41 mmole of titanium in terms of metal titanium). A solution of 3.75 mmole (0.84 g) of strontium acetate 0.5 hydrate (manufactured by Wako Pure Chemical Industries, Ltd.) and 0.70 g of lactic acid (manufactured by Wako Pure Chemical Industries, Ltd.) dissolved in 3.16 g of distilled water was added to the aqueous complex solution, and then, an aqueous solution containing 5% by weight of rhodium trichloride (manufactured by Wako Pure Chemical Industries, Ltd.) and an aqueous solution of lanthanum enneahydrate (manufactured by Wako Pure Chemical Industries, Ltd.) were added thereto so that the composition after heat crystallization is $Sr_{0.98}La_{0.02}Ti_{0.98}Rh_{0.2}O_3$. The resulting mixture was stirred at room temperature for 3 hours to obtain an orange and transparent aqueous solution containing lanthanum- and rhodium-doped strontium titanate precursor. The pH of this aqueous solution was about 4.

Furthermore, an acryl-styrene based O/W type emulsion ("EC-905EF": dispersed particle diameter of 100 to 150 nm, pH: 7 to 9, solid content of 49 to 51%; manufactured by DIC Corporation) was added as water-dispersible organic polymer particles to the aqueous solution such that the solid amount of the acryl-styrene based O/W type emulsion was 5 times as much as that of lanthanum- and rhodium-doped strontium titanate obtained after firing in terms of weight ratio, thereby preparing a dispersion.

The dispersion thus prepared was dried at 80°C for 1 hour, and then fired for 10 hours at 1000°C for high temperature crystallization to obtain powders composed of lanthanum- and rhodium-doped strontium titanate particles. Preparation conditions and properties of the obtained powders are shown in Table 4.

Comparative Example 12

Preparation of lanthanum- and rhodium-doped strontium titanate particles

Lanthanum- and rhodium-doped strontium titanate particles were prepared by a solid-phase reaction method. Specifically, powders of strontium carbonate (manufactured by Kanto Chemical Co., Ltd.), powders of titanium oxide (rutile type; manufactured by Soekawa Chemical Co., Ltd.), powders of rhodium oxide ($Rh_2O_3$; manufactured by Wako Pure Chemical Industries, Ltd.), and powders of lanthanum hydroxide each were mixed together so that the composition after heat crystallization is $Sr_{0.98}La_{0.02}Ti_{0.98}Rh_{0.02}O_3$. The resulting mixture was manually kneaded by using an agate mortar for 10 minute, followed by firing at 1000°C for 10 hours to prepare lanthanum- and rhodium-doped strontium titanate powders. Preparation conditions and properties of the obtained powders are shown in Table 4.

Example 30

Preparation of iridium-doped strontium titanate particles

0.02 mole (2.003 g) of acetylacetone (manufactured by Wako Pure Chemical Industries, Ltd.) as a hydrophobic complexing agent was added to a 20-mL sample bottle, and 0.02 mole (5.684 g) of titanium tetra-iso-propoxide (manufactured by Wako Pure Chemical Industries, Ltd.) was added thereto with stirring at room temperature to prepare a yellow aqueous solution containing a water-soluble titanium-acetylacetone complex. The aqueous solution containing this water-soluble titanium-acetylacetone complex was added to 50 mL of an aqueous solution containing 0.32 mol/L of acetic acid with stirring at room temperature. After the addition, the resulting mixture was stirred at room temperature for about 1 hour, and further at 60°C for about 1 hour to prepare a yellow and transparent aqueous solution containing a water-soluble titanium complex.

A portion (10 g) of the aqueous solution containing the water-soluble titanium complex thus prepared was then taken (containing 3.41 mmole of titanium in terms of metal titanium). A solution of 3.75 mmole (0.84 g) of strontium acetate 0.5 hydrate (manufactured by Wako Pure Chemical Industries, Ltd.) and 0.70 g of lactic acid (manufactured by Wako Pure Chemical Industries, Ltd.) dissolved in 3.16 g of distilled water was added to the aqueous complex solution, and then, an aqueous solution containing 5% by weight of chloroiridic iridium acid (manufactured by Wako Pure Chemical Industries, Ltd.) was added thereto so that the composition after heat crystallization is $SrTi_{0.98}Ir_{0.02}O_3$. The resulting mixture was stirred at room temperature for 3 hours to obtain an orange and transparent aqueous solution containing a iridium-doped strontium titanate precursor. The pH of this aqueous solution was about 4.

Furthermore, an acryl-styrene based O/W type emulsion ("EC-905EF": dispersed particle diameter of 100 to 150 nm, pH: 7 to 9, solid content of 49 to 51%; manufactured by DIC Corporation) was added as water-dispersible organic polymer particles to the aqueous solution such that the solid amount of the acryl-styrene based O/W type emulsion was 5 times as much as that of iridium-doped strontium titanate obtained after firing in terms of weight ratio, thereby preparing a dispersion.

The dispersion thus prepared was dried at 80°C for 1 hour, and then fired for 10 hours at 1000°C for high temperature crystallization to prepare powders composed of iridium-doped strontium titanate particles. Preparation conditions and properties of the obtained powders are shown in Table 4.

Comparative Example 13

Preparation of iridium-doped strontium titanate particles

Iridium-doped strontium titanate particles were prepared by a solid-phase reaction method. Specifically, powders of strontium carbonate (manufactured by Kanto Chemical Co., Ltd.), powders of titanium oxide (rutile type; manufactured by Soekawa Chemical Co., Ltd.), and powders of iridium oxide ($Ir_2O_3$; manufactured by Wako Pure Chemical Industries, Ltd.) each were mixed together so that the composition after heat crystallization is $SrTi_{0.98}Ir_{0.02}O3$. The resulting mixture was fired at 1000°C for 10 hours to prepare lanthanum- and rhodium-doped strontium titanate powders. Preparation conditions and properties of the obtained powders are shown in Table 4.

[Table 4]

| Sample | Composition | Production method | Firing temperature °C) | Firing time | Absorbance A | Absorbance A | Primary particle diameter |
|---|---|---|---|---|---|---|---|
| | | | | (hour) | @1800 nm | @250 nm | (nm) |
| Example 27 | SrTiO$_3$ | Aq solution thermal decomposition | 1000 | 10 | 0.235 | 0.857 | 50 |
| Example 28 | BaTiO$_3$ | Aq solution thermal decomposition | 1000 | 10 | 0.312 | 0.849 | 60 |
| Example 29 | La,Rh-doped SrTiO$_3$ | Aq solution thermal decomposition | 1000 | 10 | 0.548 | 0.861 | 45 |
| Example 30 | Ir-doped SrTiO$_3$ | Aq solution thermal decomposition | 1000 | 10 | 0.87 | 0.852 | 50 |
| Comparative Example 10 | SrTiO$_3$ | Solid phase reaction method | 1000 | 10 | 0.276 | 0.833 | 300 |
| Comparative Example 11 | BaTiO$_3$ | Solid phase reaction method | 1000 | 10 | 0.246 | 0.823 | 350 |
| Comparative Example 12 | La,Rh-doped SrTiO$_3$ | Solid phase reaction method | 1000 | 10 | 0.466 | 0.828 | 320 |
| Comparative Example 13 | Ir-doped SrTiO$_3$ | Solid phase reaction method | 1000 | 10 | 0.542 | 0.823 | 500 |

Examples 31 and 32

Preparation of tantalum oxide particles

0.02 mole (2.003 g) of acetylacetone (manufactured by Wako Pure Chemical Industries, Ltd.) as a hydrophobic complexing agent was added to a 20-mL sample bottle, and 0.02 mole (8.125 g) of tantalum pentaethoxide (manufactured by Wako Pure Chemical Industries, Ltd.) was added thereto with stirring at room temperature to prepare a yellow aqueous solution containing a water-soluble tantalum-acetylacetone complex. The aqueous solution containing this water-soluble tantalum-acetylacetone complex was added, at room temperature with stirring, to 50 mL of a 0.32 mol/L aqueous acetic acid solution added 0.1 mole of citric acid (manufactured by Wako Pure Chemical Industries, Ltd.) as a hydrophilic complexing agent. After the addition, the resulting mixture was stirred at room temperature for about 1 hour to prepare a transparent aqueous solution containing a water-soluble tantalum complex.

Furthermore, an acryl-styrene based O/W type emulsion ("EC-905EF": dispersed particle diameter of 100 to 150 nm, pH: 7 to 9, solid content of 49 to 51 %; manufactured by DIC Corporation) was added as water-dispersible organic polymer particles to the aqueous solution such that the solid amount of the acryl-styrene based O/W type emulsion was 5 times as much as that of $Ta_2O_5$ obtained after firing in terms of weight ratio, thereby preparing a dispersion.

10 g of the dispersion thus obtained was developed on a Pyrex® glass plate (thickness of 1 mm) surrounded therearound with a silicone tape so that the surface opening portion thereof is 10 cm square. Then, the product was dried at 80°C for 1 hour, and the silicone tape was removed. Thereafter, the product was fired for 2 hours at the temperature shown in Table 5 (800°C, 900°C) for high temperature crystallization to prepare powders composed of $Ta_2O_5$ particles. Preparation conditions and properties of the obtained powders are shown in Table 5.

Comparative Example 14

Preparation of tantalum oxide particles

Commercially available tantalum oxide particles (manufactured by Wako Pure Chemical Industries, Ltd.) were used. The properties of powders of the particles are shown in Table 5.

Comparative Example 15

The commercially available tantalum oxide particles used in Comparative Example 14 were fired at 1300°C for 5 hours. Powders of the particles thus obtained with an enhanced crystallinity were used. Preparation conditions and properties of the obtained powders are shown in Table 5.

[Table 5]

| Sample | Composition | Production method | Firing temperature (°C) | Firing time | Absorbance A | Absorbance A | Primary particle diameter |
|---|---|---|---|---|---|---|---|
| | | | | (hour) | @1800 nm | @250 nm | (nm) |
| Example 31 | $Ta_2O_5$ | Aq solution thermal decomposition | 800 | 2 | 0.309 | 0.8636 | 35 |
| Example 32 | $Ta_2O_5$ | Aq solution thermal decomposition | 900 | 2 | 0.213 | 0.8609 | 40 |
| Comparative Example 14 | $Ta_2O_5$ | Commercial product | - | 2 | 0.334 | 0.867 | 110 |
| Comparative Example 15 | $Ta_2O_5$ | Commercial product + heat treatment | 1300 | 2 | 0.114 | 0.8667 | 280 |

Evaluation Results

Crystal structure and fine structure of rhodium-doped strontium titanate

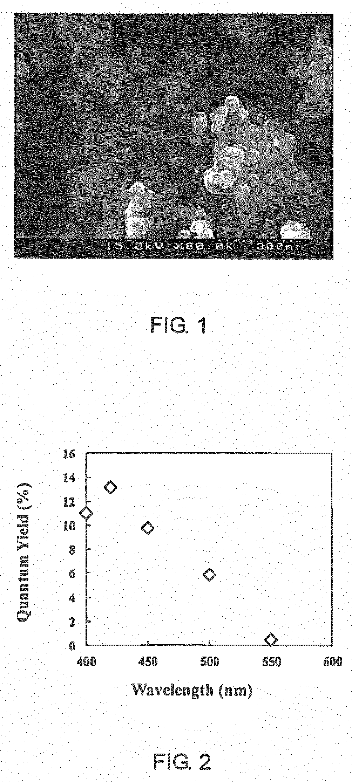

The rhodium-doped strontium titanate prepared in Examples 1 to 14 and Comparative Examples 1 to 7 was analyzed by X-ray diffractometry. As a result, it was confirmed that all the samples have a single-phase perovskite structure. The primary particle diameter of the rhodium-doped strontium titanate calculated with scanning electron microscopic observation is shown in Table 1. Specifically, the primary particle diameter was determined by averaging the diameter of the 50 crystal particles in observation, each of which was approximated by a circle, at a magnification of 40,000 times under a scanning electron microscope (manufactured by Hitachi, Ltd., "S-4100"). As a result, for instance, the primary particle diameter of the particles in example 2 (or example 3) was not more than 50 nm, and therefore, it was confirmed that the fine particle shape thereof was maintained even after high-temperature crystallization treatment (see Fig. 1).

Optical properties of the rhodium-doped strontium titanate particles

The optical properties of the rhodium-doped strontium titanate particles prepared in Examples 1 to 14 and Comparative Examples 1 to 7 were measured as follows. That is, an integrating sphere unit ("ISV-722"; manufactured by Japan Spectroscopic Co., Ltd.) was mounted on an ultraviolet- visible-near-infrared spectrophotometer ("V-670; manufactured by Japan Spectroscopic Co., Ltd.). On that basis, 30 mg of powders composed of the above particles were filled into a window portion ($\phi$ 5 mm) in a trace powder cell ("PSH-003"; manufactured by Japan Spectroscopic Co., Ltd.) at a filling fraction of not less than 50%. Under such conditions, a diffusion reflection spectrum of the above sample was measured to determine a spectral reflectance R and an absorbance A at each wavelength (570 nm, 1800 nm). In this case, alumina sintered pellets were used in the baseline measurement, and the amount of the powders was adjusted such that absorbance A at wavelength 315 nm is in the range of 0.86 to 0.87. In Table 1, each absorbance A at wavelengths 570 nm and 1800 nm is shown.

Structure measurement of rhodium-doped strontium titanate particles

The $R_{SP}$ value of rhodium-doped strontium titanate particles was measured at room temperature with a pulse NMR particle boundary evaluation analyzer ("Acorn area"; manufactured by Nihon Rufuto Co., Ltd.). Specifically, at first, 0.125 g of the rhodium-doped strontium titanate particles obtained in each of Examples 1 to 6 and 12 and Comparative Examples 1, 5, and 7 was added to 2.375 g of an aqueous solution containing 0.23% of AOT (di-2-ethylhexyl sodium sulfosuccinate), and then, this mixture was irradiated with an ultrasonic beam for 2 minutes by using a 20-W ultrasonic bath to prepare a sample for pulse NMR. Next, immediately after the ultrasonic beam irradiation, the sample put in a NMR tube was disposed in a coil between two permanent magnets, and then, the coil was excited by electromagnetic wave (RF) pulse with about 13 MHz to generate magnetic field, thereby generating a magnetic field orientation of protons in the sample, resulting in inducing a temporary shift in the magnetic field orientation of protons in the sample. When this induction was stopped, protons in the sample were realigned with static magnetic field $B_0$, and with this realignment, the voltage drop of the coil, so-called free induction decay (FID), took place, and from a specific pulse one sequence (combination of the number and the interval of the RF pulse), T1 (vertical relaxation time) and T2 (horizontal relaxation time) were measured. Here, the average value of relaxation time constant, which is inverse number of T2, measured for 5 times in succession was taken as $R_{av}$. In the similar manner, $R_b$ of bulk water was measured separately, and the $R_{SP}$ value was obtained by the following equation.

$$R_{SP} = (R_b - R_{av})/R_b$$

From the obtained $R_{SP}$ value, structure of rhodium-doped strontium titanate particles was measured.

Result

The $R_{SP}$ values are shown in Table 1. In all the Examples, the $R_{SP}$ values were 0.88 or more. From this, it was confirmed that rhodium-doped strontium titanate particles obtained in examples have a large interaction between water and a surface of the particles. Namely, it was confirmed that the surface area in which the particles and water are in contact with each other is large and that the specific surface area of the particles is large.

Hydrogen generation activity of rhodium-doped strontium titanate particles by splitting water

Hydrogen generation activity in splitting water under visible light irradiation in each sample of Examples 1 to 7, 12 and 13, and Comparative Examples 1 and 4 to 7 was evaluated in the following manner. In the measurements of the hydrogen generation activity in splitting water under visible light irradiation and the quantum yield described later, rhodium-doped strontium titanate particles in each Examples and Comparative Examples which further supported a co-catalyst were used.

Examples 1, 3, 6, 7, 12, and 13, and Comparative Examples 1 and 4 to 7

0.1 g of powders composed of rhodium-doped strontium titanate particles supporting 0.5% by weight of platinum as a co-catalyst by a photoreduction method and 200 mL of a aqueous solution containing 10% by volume of methanol as a sacrificial reagent were mixed in a glass flask with a Pyrex® window, and then, the resulting mixture was stirred by a stirrer to obtain a reaction solution. Next, this glass flask containing the reaction solution was placed in a closed circulation apparatus, and then, the atmosphere inside reaction system was replaced with argon. Next, visible light was irradiated through the Pyrex® window by a 300-W xenon lamp (PE-300BF; manufactured by Cermax) equipped with a UV cutoff filter (L-42; manufactured by HOYA). Next, the amount of hydrogen generated by reduction of water by a photocatalytic reaction was analyzed over time with a gas chromatography (GC-8A, TCD detector, MS-5A column; manufactured by Shimadzu). Here, the powders of rhodium-doped strontium titanate particles supporting 0.5% by weight of platinum by the photoreduction method were prepared specifically as follows: 0.1 g of rhodium-doped strontium titanate particles, 0.132 g of an aqueous solution containing 1% by weight of chloroplatinic acid hexahydrate (manufactured by Wako Pure Chemical Industries, Ltd.) as a co-catalyst raw material, and 200 mL of ultrapure water containing 10% by volume of methanol as an oxidative sacrifical reagent were mixed in a glass flask with a Pyrex® window. While this resulting solution was stirred with a stirrer, under an argon atmosphere, visible light was irradiated for 2 hours through the Pyrex® window by a 300-W xenon lamp (PE-300BF; manufactured by Cermax) equipped with a UV cutoff filter (L-42; manufactured by HOYA).

Example 2

Evaluations were carried out in the same manner as in example 1, except that 0.05 g of powders of rhodium-doped strontium titanate particles supporting 0.5% by weight of platinum as a co-catalyst was used.

Example 4

Evaluations were carried out in the same manner as in example 1, except that an impregnation method was used as a supporting method of platinum as a co-catalyst in place of the photoreduction method. Specifically, 0.1 g of powders composed of rhodium-doped strontium titanate particles, 0.4 g of water, and 0.031 g of an aqueous solution containing 1% by weight of chloroplatinic acid were kneaded by an agate mortar for 30 minutes to obtain a paste thereof. This paste was dried at room temperature for 15 hours, and then the dried product was fired at 400°C for 30 minutes to prepare a sample by the impregnation method.

Example 5

Evaluations were carried out in the same manner as in example 1, except that 0.5% by weight of ruthenium was supported by a photoreduction method by using chlororuthenium n hydrate (manufactured by Wako Pure Chemical Industries, Ltd.) in place of platinum as a co-catalyst.

Results

With regard to each sample of Examples 1 to 7, 12 and 13, and Comparative Examples 1 and 4 to 7, the generation amount of hydrogen ($\mu$mole) and the hydrogen generation rate ($\mu$mole/hour/g) during 3 hours after the start of light irradiation are shown in Table 6. According to this, for example, it was confirmed that the hydrogen generation rate of the sample of example 2 was 759 $\mu$mole/hour/g, and thus, example 2 had a very high hydrogen generation activity. Further, each sample of Examples 1 and 3 to 7 was confirmed to have the hydrogen generation rate of not less than 400 $\mu$mole/hour/g and have a high hydrogen generation activity.

[Table 6]

| Sample | Composition | Production method | Co-catalyst metal | Co-catalyst supported amount(% by weight) | Co-catalyst supporting method | Co-catalyst amount used for hydrogen generating reaction (g) | H2 Generation amount after 3 hour of light irradiation ($\mu$mol) | Hydrogen generation rate per unit weight of powders ($\mu$mol/hour/ g) |
|---|---|---|---|---|---|---|---|---|
| Example 1 | Rh-Doped SrTiO$_3$ | Aq. solution thermal decomposition | Pt | 0.5 | Photoreduction | 0.1 | 161 | 536 |
| Example 2 | Rh-Doped StTiO$_3$ | Aq. solution thermal decomposition | Pt | 0.5 | Photoreduction | 0.05 | 228 | 759 |
| Example 3 | Rh-Doped SrTiO$_3$ | Aq. solution thermal decomposition | Pt | 05 | Photoreduction | 0.1 | 261 | 869 |
| Example 4 | Rh-Doped SrTiO$_3$ | Aq. solution thermal decomposition | Pt | 0 5 | Impregnation | 0.1 | 315 | 1050 |
| Example 5 | Rh-Doped SrTiO$_3$ | Aq solution thermal decomposition | Ru | 05 | Photoreduction | 0.1 | 140 | 467 |
| Example 6 | Rh-Doped SrTiO$_3$ | Aq solution thermal decomposition | Pt | 0 5 | Photoreduction | 0.1 | 173 | 577 |
| Example 7 | Rh-Doped SrTiO$_3$ | Aq solution thermal decomposition | Pt | 0 5 | Photoreduction | 0.1 | 141 | 470 |
| Example 8 | Rh-Doped SrTiO$_3$ | Aq solution thermal decomposition | Pt | 0.5 | Photoreduction | | | |
| Comparative Example 1 | Rh-Doped SrTiO$_3$ | Solid phase reaction method | Pt | 0.5 | Photoreduction | 0.1 | 118 | 394 |

| Sample | Composition | Production method | Co-catalyst metal | Co-catalyst supported amount(% by weight) | Co-catalyst supporting method | Co-catalyst amount used for hydrogen generating reaction (g) | H2 Generation amount after 3 hour of light irradiation ($\mu$mol) | Hydrogen generation rate per unit weight of powders ($\mu$mol/hour/ g) |
|---|---|---|---|---|---|---|---|---|
| Comparative Example 2 | Rh-Doped SrTiO$_3$ | Solid phase reaction method | | | | | | |
| Comparative Example 3 | Rh-Doped SrTiO$_3$ | Solid phase reaction method | | | | | | |
| Example 9 | Rh-Doped SrTiO$_3$ | Aq solution thermal decomposition | | | | | | |
| Example 10 | Rh-Doped SrTiO$_3$ | Aq solution thermal decomposition | | | | | | |
| Example 11 | Rh-Doped SrTiO$_3$ | Aq solution thermal decomposition | | | | | | |
| Example 12 | Rh-Doped SrTiO$_3$ | Aq solution thermal decomposition | Pt | 0.5 | Photoreduction | 0.1 | 37 | 123 |
| Example 13 | Rh-Doped SrTiO$_3$ | Aq solution thermal decomposition | Pt | 05 | Photoreduction | 0. 1 | 37 | 123 |
| Example 14 | Rh-Doped SrTiO$_3$ | Aq. solution thermal decomposition | | | | | | |
| Comparative Example 4 | Rh-Doped SrTiO$_3$ | Complex polymerization method | Pt | 0 5 | Phatoreduction | 0. 1 | 0 | 0 |

EP 3 006 402 A1

| Sample | Composition | Production method | Co-catalyst metal | Co-catalyst supported amount(% by weight) | Co-catalyst supporting method | Co-catalyst amount used for hydrogen generating reaction (g) | H2 Generation amount after 3 hour of light irradiation ($\mu$mol) | Hydrogen generation rate per unit weight of powders ($\mu$mol/hour/ g) |
|---|---|---|---|---|---|---|---|---|
| Comparative Example 5 | Rh-Doped $SrTiO_3$ | Lactic acid polymerization method | Pt | 0.5 | Photoreduction | 0.1 | 113 | 377 |
| Comparative Example 6 | Rh-Doped $SrTiO_3$ | Aq. solution thermal decomposition | Pt | 0.5 | Photoreduction | 0.1 | 47 | 157 |
| Comparative Example 7 | Rh-Doped $SrTiO_3$ | Aq. solution thermal decomposition | Pt | 0.5 | Photoreduction | 0.1 | 54 | 180 |

EP 3 006 402 A1

Quantum yield of rhodium-doped strontium titanate particles by splitting water

Quantum yield of rhodium-doped strontium titanate particles obtained in Example 3 under visible light irradiation was studied in the following way. 0.1 g of powders of rhodium-doped strontium titanate particles supporting 0.5% by weight of platinum by a photoreduction method and 200 mL of an aqueous solution containing 10% by volume of methanol as a sacrificial reagent were mixed in a glass flask with a Pyrex® window, and then, the resulting mixture was stirred by a stirrer to obtain a reaction solution. Next, this glass flask containing the reaction solution was placed in a closed circulation apparatus, and then, the atmosphere inside reaction system was replaced with argon. Next, monochromatic light was irradiated through the Pyrex® window by a wavelength-variable monochromatic light source equipped with a spectrometer (SM-25F; manufactured by Bunkoukeiki Co., Ltd.). Next, the amount of hydrogen generated by reduction of water by a photocatalytic reaction was analyzed over time with a gas chromatography (GC-8A, TCD detector, MS-5A column; manufactured by Shimadzu). The quantum yield (%) was calculated from the following equation.

$$\text{Quantum yield (\%)} = ((\text{number of hydrogen molecules generated} \times 2)/\text{number of incident photons}) \times 100$$

Here, the number of incident photons per unit wavelength was calculated by measuring a illuminance (W/cm$^2$/nm) in each wavelength (band width of about 10 nm) with a spectroradiometer (USR-55; manufactured by USHIO Inc.) followed by dividing the illuminance with the energy possessed by one photon of each wavelength.

As a result, the quantum yield of this sample at 420 nm was 13.2%, showing a very high hydrogen generation activity (see FIG. 2).

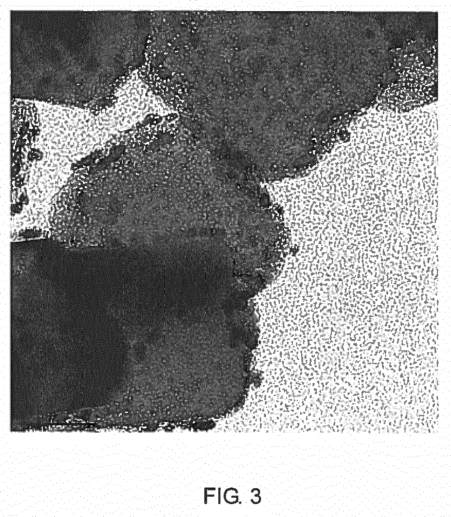

In addition, from the transmission electron microscopic observation, it was confirmed that the particles supporting platinum in Example 2 show a cubic morphology having one side length of about 45 nm with a cubic crystalline Perovskite structure (see FIG. 3). Also it was confirmed that the particle diameter of platinum supported by the photoreduction method is about 2 nm (see FIG. 3).

Crystal structure and fine structure of $La_2Ti_2O_7$ particles

The powders composed of the $La_2Ti_2O_7$ particles prepared in each of Examples 15 to 20 and Comparative Example 8 was analyzed by X-ray diffractometry. As a result, it was confirmed that all the samples have a single-phase $La_2Ti_2O_7$. The primary particle diameter of the $La_2Ti_2O_7$ particles calculated from scanning electron microscopic observation is shown in Table 2. As a result, it was confirmed that the primary particle diameter of the particles of all of Examples 15 to 20 are 50 nm or less and that the particles maintain fine particle shape even after high temperature crystallization treatment.

Optical properties of the $La_2Ti_2O_7$ particles

With regard to the $La_2Ti_2O_7$ particles obtained in examples 15 to 20 and Comparative Example 8, in a similar way to the above, the spectral reflectance R and the absorbance A at each wavelength (250 nm, 800 nm) were determined. In this case, the amount of the powders was adjusted such that the absorbance A at wavelength 250 nm is in the range of 0.85 to 0.87. In Table 2, the absorbance A at each of wavelengths 250 nm and 800 nm is shown. As a result, in all of Examples 15 to 19, the absorbance A at 800 nm due to oxygen defect is 0.18 or less, so that it was confirmed that the number of oxygen defect is low.

Structure measurement of $La_2Ti_2O_7$ particles

The $R_{SP}$ values of the $La_2Ti_2O_7$ particles obtained in Example 18 and Comparative Example 8 were determined in the same way as mentioned above. In this case, 50 mg of the $La_2Ti_2O_7$ particles obtained in Example 18 and Comparative Example 8 each was added to 1 g of an aqueous solution containing 0.2% of ammonium acrylate oligomer, and then, the resulting mixture was irradiated with an ultrasonic beam for 2 minutes by using a 20-W ultrasonic bath to prepare a sample for pulse NMR.

Results

The $R_{SP}$ values are shown in Table 2. In Example 18, the $R_{SP}$ value was 0.51. From this, it was confirmed that the $La_2Ti_2O_7$ particles obtained in this example have a large interaction between water and a surface of the particles.

Namely, it was confirmed that the surface area in which the particles are in contact with water is large and therefore that the specific surface area of the particles is large.

Crystal structure and fine structure of $Ba_2Ta_2O_7$ particles

The powders composed of the $Ba_2Ta_2O_7$ particles prepared in each of examples 21 to 26 and Comparative Example 9 was analyzed by X-ray diffractometry. As a result, it was confirmed that all the samples have a single-phase $Ba_2Ta_2O_7$. The primary particle diameter of the $Ba_2Ta_2O_7$ particles calculated from scanning electron microscopic observation is shown in Table 3. As a result, it was confirmed that the primary particle diameter of the particles of Examples 21 to 24 is within the range of 40 to 60 nm and therefore that the particles maintain fine particle shape even after high temperature crystallization treatment.

Optical properties of the $Ba_2Ta_2O_7$ particles

With regard to the $Ba_2Ta_2O_7$ particles obtained in Examples 21 to 26 and Comparative Example 9, in a similar way to the above, the spectral reflectance R and the absorbance A at each wavelength (250 nm, 800 nm) were evaluated. In this case, the amount of the powders was adjusted such that the absorbance A at wavelength 250 nm is in the range of 0.83 to 0.86. In Table 3, the absorbance A at each of wavelengths 250 nm and 1800 nm is shown. As a result, in all of Examples 21 to 24, the absorbance A at 800 nm due to oxygen defect is 0.25 or less, so that it was confirmed that the number of oxygen defect is low.

Structure measurement of the $Ba_2Ta_2O_7$ particles

The $R_{SP}$ values of the $Ba_2Ta_2O_7$ particles obtained in Example 23 and Comparative Example 9 were determined in the same way as mentioned above. In this case, 50 mg of the $Ba_2Ta_2O_7$ particles obtained in Example 23 and Comparative Example 9 each was added to 1 g of an aqueous solution containing 0.2% of ammonium acrylate oligomer, and then, the resulting mixture was irradiated with an ultrasonic beam for 2 minutes by using a 20-W ultrasonic bath to prepare a sample for pulse NMR.

Results

The $R_{SP}$ values are shown in Table 3. In Example 23, the $R_{SP}$ value was 1.52. From this, it was confirmed that the $Ba_2Ta_2O_7$ particles obtained in this Example have a large interaction between water and a surface of the particles. Namely, it was confirmed that the surface area in which the particles are in contact with water is large and therefore that the specific surface area of the particles is large.

Crystal structure and fine structure of the $SrTiO_3$ particles

The powders composed of the $SrTiO_3$ particles prepared in Example 27 and Comparative Example 10 was analyzed by X-ray diffractometry. As a result, it was confirmed that all the samples have a single-phase $SrTiO_3$. The primary particle diameter of the $SrTiO_3$ particles calculated from scanning electron microscopic observation is shown in Table 4. As a result, it was confirmed that the primary particle diameter of the particles of Example 27 is 50 nm and therefore that the particles maintain fine particle shape even after high temperature crystallization treatment.

Optical properties of $SrTiO_3$ particles

With regard to the $SrTiO_3$ particles obtained in Example 27 and Comparative Example 10, in a similar way to the above, the spectral reflectance R and the absorbance A at each wavelength (250 nm, 1800 nm) were evaluated, In this case, the amount of the powders was adjusted such that the absorbance A at wavelength 250 nm is in the range of 0.82 to 0.87. In Table 4, the absorbance A at each of wavelengths 250 nm and 1800 nm is shown. As a result, in Example 27, the absorbance A at 1800 nm due to oxygen defect is 0.235, so that it was confirmed that the number of oxygen defect is low.

Crystal structure and fine structure of the $BaTiO_3$ particles

The powders composed of the $BaTiO_3$ particles prepared in Example 28 and Comparative Example 11 was analyzed by X-ray diffractometry. As a result, it was confirmed that all the samples have a single-phase $BaTiO_3$. The primary particle diameter of the $BaTiO_3$ particles calculated from scanning electron microscopic observation is shown in Table 4. As a result, it was confirmed that the primary particle diameter of the particles of Example 28 is 60 nm and therefore that the particles maintain fine particle shape even after high temperature crystallization treatment.

Optical_properties of the $BaTiO_3$ particles

With regard to the $BaTiO_3$ particles obtained in Example 28 and Comparative Example 11, in a similar way to the above, the spectral reflectance R and the absorbance A at each wavelength (250 nm, 1800 nm) were evaluated. In this case, the amount of the powders was adjusted such that the absorbance A at wavelength 250 nm is in the range of 0.82 to 0.87. In Table 4, the absorbance A at each of wavelengths of 250 nm and 1800 nm is shown. As a result, in Example 28, the absorbance A at 1800 nm due to oxygen defect is 0.312, so that it was confirmed that the number of oxygen defect is low.

Crystal structure and fine structure of lanthanum- and rhodium-doped strontium titanate particles

The powders composed of the lanthanum- and rhodium-doped strontium titanate particles prepared in Example 29 and Comparative Example 12 was analyzed by X-ray diffractometry. As a result, it was confirmed that all the samples have a single-phase lanthanum- and rhodium-doped strontium titanate. The primary particle diameter of the lanthanum- and rhodium-doped strontium titanate particles calculated from scanning electron microscopic observation is shown in Table 4. As a result, it was confirmed that the primary particle diameter of the particles in Example 29 is 45 nm and therefore that the particles maintain fine particle shape even after high temperature crystallization treatment.

Optical properties of the lanthanum, rhodium-doped strontium titanate particles

With regard to the lanthanum- and rhodium-doped strontium titanate particles obtained in Example 29 and Comparative Example 12, in a similar way to the above, the spectral reflectance R and the absorbance A at each wavelength (250 nm, 1800 nm) were evaluated. In this case, the amount of the powders was adjusted such that the absorbance A at wavelength 250 nm is in the range of 0.82 to 0.87. In Table 4, the absorbance A at each of wavelengths 250 nm and 1800 nm is shown. As a result, in Example 29, the absorbance A at 1800 nm due to oxygen defect is 0.548, so that it was confirmed that the number of oxygen defect is low.

Crystal structure and fine structure of the iridium-doped strontium titanate particles

The powders composed of the iridium-doped strontium titanate particles prepared in Example 30 and Comparative Example 13 was analyzed by X-ray diffractometry. As a result, it was confirmed that all the samples have a single-phase iridium-doped strontium titanate. The primary particle diameter of the iridium-doped strontium titanate particles calculated from scanning electron microscopic observation is shown in Table 4. As a result, it was confirmed that the primary particle diameter of the particles in Example 30 is 50 nm and therefore that the particles maintain fine particle shape even after high temperature crystallization treatment.

Optical properties of the iridium-doped strontium titanate particles

With regard to the iridium-doped strontium titanate particles obtained in Example 30 and Comparative Example 13, in a similar way to the above, the spectral reflectance R and the absorbance A at each wavelength (250 nm, 1800 nm) were evaluated. In this case, the amount of the powders was adjusted such that the absorbance A at wavelength 250 nm is in the range of 0.82 to 0.87. In Table 4, the absorbance A at each of wavelengths 250 nm and 1800 nm is shown. As a result, in Example 30, the absorbance A at 1800 nm due to oxygen defect is 0.87, so that it was confirmed that the number of oxygen defect is low.

Crytstal structure and fine structure of the tantalum oxide particles

The powders composed of the $Ta_2O_5$ particles obtained in Examples 31 and 32 and Comparative Example 14 and 15 was analyzed by X-ray diffractometry. As a result, it was confirmed that all the samples have a single-phase $Ta_2O_5$. The primary particle diameter of the $Ta_2O_5$ particles calculated from scanning electron microscopic observation is shown in Table 5. As a result, it was confirmed that the primary particle diameter of the particles in both Examples 31 and 32 are about 40 nm and therefore that fine the particles maintain particle shape even after high temperature crystallization treatment.

Optical properties of the tantalum oxide particles

With regard to the $Ta_2O_5$ particles obtained in Examples 31 and 32 and Comparative Examples 14 and 15, in a similar way to the above, the spectral reflectance R and the absorbance A at each wavelength (250 nm, 1800 nm) were evaluated. In the baseline measurement, the alumina sintered pellets were used. In this time, the amount of the powders was adjusted such that the absorbance A at wavelength 250 nm is in the range of 0.86 to 0.87. In Table 5, the absorbance A at each of wavelengths 250 nm and 1800 nm is shown. As a result, in each of Examples 31 and 32, the absorbance A at 1800 nm due to oxygen defect is 0.32 or less, so that it was confirmed that the number of oxygen defect is low.

**Claims**

1.   A method for producing metal oxide particles, comprising steps of:

providing an aqueous dispersion comprising a water-soluble transition metal complex and water-dispersible organic polymer particles, wherein the water-soluble transition metal complex comprises one transition metal ion selected from the group consisting of a titanium ion, a tantalum ion, and a niobium ion; as well as a hydrophobic complexing agent and a hydrophilic complexing agent both being coordinated with the transition metal ion; drying the aqueous dispersion to produce a dried body; and firing the dried body.

2.   The method according to claim 1, wherein the hydrophobic complexing agent is a diketone compound.

3.   The method according to claim 2, wherein the diketone compound is a diketone compound represented by the following general formula (1):

$$Z_1\text{-CO-CH}_2\text{-CO-}Z_2 \qquad (1)$$

wherein $Z_1$ and $Z_2$ each represents independently an alkyl group or an alkoxy group.

4.   The method according to claim 3, wherein the diketone compound represented by the general formula (1) is acetylacetone or ethyl acetoacetate.

5.   The method according to any one of claims 1 to 4, wherein the hydrophilic compound is a carboxylic acid.

6.   The method according to claim 5, wherein the hydrophilic complexing agent is a carboxylic acid represented by the formula $R^1$-COOH wherein $R^1$ represents a $C_{1-4}$ alkyl group; or a hydroxy acid or a dicarboxylic acid both having 1 to 6 carbon atoms.

7.   The method according to claim 6, wherein the hydrophilic complexing agent is acetic acid or lactic acid.

8.   The method according to any one of claims 1 to 7, wherein the water-dispersible organic polymer particles are oil-in-water (O/W) emulsions.

9.   The method according to any one of claims 1 to 8, wherein a particle diameter of the water-dispersible organic polymer particles is 50 nm or more to 300 nm or less.

10.   The method according to any one of claims 1 to 9, wherein the water-dispersible organic polymer particles are acryl-based polymer particles or acryl-styrene-based polymer particles.

11.   The method according to any one of claims 1 to 10, wherein the water-soluble transition metal complex further comprises, together with the transition metal ion, a metal ion other than the transition metal ion.

12.   The method according to any one of claims 1 to 11, wherein a temperature for firing the dried body is 700°C or higher to 1100°C or lower.

13.   The method according to any one of claims 1 to 12, wherein the water-soluble titanium complex is a titanium complex whose coordination number with the titanium ion is 6, comprising the titanium ion and ligands coordinated therewith; the ligands being:

a first ligand which functions as a divalent ligand and is represented by the following general formula:

$$Z_1\text{-CO-CH}_2\text{-CO-}Z_2$$

wherein $Z_1$ and $Z_2$ each represents independently an alkyl group or an alkoxy group,
a second ligand which is a carboxylate,
a third ligand and a fourth ligand each being independently selected from the group consisting of an alkoxide and a hydroxide ion, and
a fifth ligand which is $H_2O$.

14. The method according to any one of claims 1 to 13, wherein the method further comprises, between the drying step and the firing step, a step of calcining the dried body, wherein a temperature for calcining the dried body is lower than that for firing the dried body.

15. The method according to claim 14, wherein the temperature for calcining the dried body is 400°C or higher to below 700°C.

16. Metal oxide particles produced by the method according to any one of claims 1 to 15.

17. The metal oxide particles according to claim 16, wherein a primary particle diameter thereof is not less than 30 nm to less than 190 nm.

18. Photocatalytic particles comprising the metal oxide particles according to claim 16 or 17.

19. A method for splitting water, wherein the metal oxide particles being in contact with water according to claim 16 or 17 is irradiated with visible light.

FIG. 1

FIG. 2

FIG. 3

## INTERNATIONAL SEARCH REPORT

| International application No. |
|---|
| PCT/JP2014/064792 |

A.  CLASSIFICATION OF SUBJECT MATTER
*C01G23/00*(2006.01)i, *B01J23/58*(2006.01)i, *B01J35/02*(2006.01)i, *B01J37/08*(2006.01)i, *C01B3/04*(2006.01)i, *C01G35/00*(2006.01)i

According to International Patent Classification (IPC) or to both national classification and IPC

B.  FIELDS SEARCHED

Minimum documentation searched (classification system followed by classification symbols)
C01G23/00, B01J23/58, B01J35/02, B01J37/08, C01B3/04, C01G35/00

Documentation searched other than minimum documentation to the extent that such documents are included in the fields searched
Jitsuyo Shinan Koho        1922-1996   Jitsuyo Shinan Toroku Koho   1996-2014
Kokai Jitsuyo Shinan Koho   1971-2014   Toroku Jitsuyo Shinan Koho   1994-2014

Electronic data base consulted during the international search (name of data base and, where practicable, search terms used)
JSTPlus/JST7580(JDreamIII)

C.  DOCUMENTS CONSIDERED TO BE RELEVANT

| Category* | Citation of document, with indication, where appropriate, of the relevant passages | Relevant to claim No. |
|---|---|---|
| Y | JP 2000-63118 A  (JSR Corp.), 29 February 2000 (29.02.2000), claims; paragraphs [0005], [0006], [0015] to [0019], [0024]; example 3; paragraph [0033] (Family: none) | 1-16 |
| Y | JP 3-115106 A  (Kaneka Corp.), 16 May 1991 (16.05.1991), claims; page 3, upper left column, line 9 to lower right column, line 4; page 4, upper right column, line 5 to lower left column, line 7; page 5, upper left column, line 20 to lower right column, line 6; examples (Family: none) | 1-16 |

☒  Further documents are listed in the continuation of Box C.        ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 August, 2014 (20.08.14) | 02 September, 2014 (02.09.14) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
|---|
| PCT/JP2014/064792 |

| C (Continuation). | DOCUMENTS CONSIDERED TO BE RELEVANT | | |
|---|---|---|---|
| Category* | Citation of document, with indication, where appropriate, of the relevant passages | | Relevant to claim No. |
| Y<br>X | JP 2012-102001 A (TOTO Ltd.),<br>31 May 2012 (31.05.2012),<br>claim 1; paragraphs [0004], [0005], [0025] to<br>[0030], [0043] to [0045]; examples 1 to 4;<br>paragraphs [0052], [0053]<br>(Family: none) | | 5-16<br>16-19 |
| A | JP 2003-267704 A (Sumitomo Osaka Cement Co.,<br>Ltd.),<br>25 September 2003 (25.09.2003),<br>claims; paragraphs [0014] to [0018], [0023] to<br>[0031]<br>(Family: none) | | 1-19 |
| A | JP 52-62181 A (Allied Chemical Corp.),<br>23 May 1977 (23.05.1977),<br>entire text<br>& JP 53-67690 A  & US 4011149 A<br>& US 4090933 A | | 1-19 |
| A | SASAKI, Y. et al., Solar Water Splitting Using<br>Powdered Photocatalysts Driven by Z-Schematic<br>Interparticle Electron Transfer without an<br>Electron Mediator, J. Phys. Chem. C, 2009.09.<br>14, Vol.113, No.40, p.17536-17542, DOI:10.1021/<br>jp907128k | | 1-19 |
| P,A | WO 2013/180307 A1 (TOTO Ltd.),<br>05 December 2013 (05.12.2013),<br>claims; examples; fig. 1 to 3<br>(Family: none) | | 1-19 |
| P,A | WO 2014/046305 A1 (TOTO Ltd.),<br>27 March 2014 (27.03.2014),<br>claims; examples<br>(Family: none) | | 1-19 |
| P,A | JP 2014-4574 A (TOTO Ltd.),<br>16 January 2014 (16.01.2014),<br>claims; examples<br>(Family: none) | | 1-19 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004008963 A
- JP 2002066333 A
- JP 2012056947 A

**Non-patent literature cited in the description**

- **SASAKI et al.** *J. Phys. Chem. C,* 2009, 17536-17542
- **IWASHINA et al.** *Journal of the American Chemical Society,* 2011, 13272-13275
- **CRONEMEYER et al.** *Phys. Rev.,* 1959, vol. 113, 1222-1225